(19) Europäisches Patentamt
European Patent Office
Office européen des brevets

(11) EP 2 590 039 A1

(12) EUROPEAN PATENT APPLICATION
published in accordance with Art. 153(4) EPC

(43) Date of publication:
08.05.2013 Bulletin 2013/19

(51) Int Cl.:
*G05B 19/4093* (2006.01)    *G05B 19/4097* (2006.01)

(21) Application number: 10854045.1

(86) International application number:
PCT/JP2010/004355

(22) Date of filing: 02.07.2010

(87) International publication number:
WO 2012/001746 (05.01.2012 Gazette 2012/01)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(71) Applicant: Mitsubishi Electric Corporation
Tokyo 100-8310 (JP)

(72) Inventors:
• MATSUBARA, Susumu
Tokyo 100-8310 (JP)
• IWASAKI, Takashi
Tokyo 100-8310 (JP)

• IRIGUCHI, Kenji
Tokyo 100-8310 (JP)
• MATSUURA, Mahito
Nagoya-shi
Aichi 461-0048 (JP)
• TASAKA, Takeshi
Fukuyama-shi
Hiroshima 720-0814 (JP)

(74) Representative: HOFFMANN EITLE
Patent- und Rechtsanwälte
Arabellastrasse 4
81925 München (DE)

(54) NUMERICAL CONTROL PROGRAMMING METHOD, NUMERICAL CONTROL PROGRAMMING DEVICE, PROGRAM, AND NUMERICAL CONTROL DEVICE

(57) A numerical control programming method is characterized by comprising: a machining unit editing step for generating an edited machining unit by editing, based on an input, at least one machining unit out of a plurality of machining units which configure a first machining program generated based on a first material shape model and a product shape model; a second non-edited machining unit generating step for generating a second non-edited machining unit which corresponds to a machining shape model having no duplication with a machining shape model which corresponds to the edited machining unit based on a first non-edited machining unit which is a machining unit other than the edited machining unit out of the plurality of machining units which configure the first machining program; and a second machining program generating step for generating a second machining program including the edited machining unit and the second non-edited machining unit.

Fig. 5

EP 2 590 039 A1

**Description**

Technical Field

The present invention relates to numerical control programming methods for automatically generating machining programs to be executed by numerical control apparatuses which control machine tools, numerical control programming devices, programs for executing numerical control programming methods, and numerical control apparatuses for executing the programs.

Background Art

When machining a workpiece into a product shape by using a machining tool, an operator first generates CAD data for representing an intended product shape by using a CAD (Computer Aided Design) device. Next, the operator determines machining sequence of each portion to be machined based on the CAD data, and generates a machining program manually or by using a CAM (Computer Aided Manufacturing) device. After that, the operator inputs the machining program to a numerical control apparatus, and installs the workpiece in the machining tool. The operator also sets presets of tools to be used, offset amounts of tools, and the like in the numerical control apparatus, and attaches tools to the machining tool. And then, by starting execution of the machining program in the numerical control apparatus by the operator, the numerical control apparatus controls the machining tool and the workpiece is machined into the product shape. Recently, attempts have been made to automate these processes as much as possible and to reflect know-how accumulated by operators on the machining.

As a conventional method for generating manufacturing data, there is a method in which, after obtaining machining features to be integrated, machining sequence for the integrated machining feature is obtained and then the integrated machining feature is converted into manufacturing data based on the obtained machining sequence (for example, Patent Document 1).

Also, as a conventional method for generating a machining path, there is a method in which, after extracting all portions to be machined from three dimensional CAD data of parts, machining sequence is determined by editing and optimizing machining features and machining directions based on shape characteristics of the extracted portions to be machined and then a machining path is generated based on the determined machining sequence (for example, Patent Document 2).

Prior Art Documents

Patent Documents

**[0005]**

　　Patent Document 1: Japanese Unexamined Patent Application Publication No. 2008-9806
　　Patent Document 2: Japanese Unexamined Patent Application Publication No. 2002-268718

Disclosure of the Invention

Problem that the Invention is to solve

However, in the technologies disclosed by Patent Documents 1 and 2, since editing machining features and machining directions are only supported, a machining path is generated with performing no processing at all on machining features other than the edited machining features. This brings a problem of generating a machining path inferior in machining efficiency having useless duplication of machining areas.

Means for solving the Problem

A numerical control programming method is characterized by comprising: a machining unit editing step for generating an edited machining unit by editing, based on an input, at least one machining unit out of a plurality of machining units which configure a first machining program generated based on a first material shape model and a product shape model; a second non-edited machining unit generating step for generating a second non-edited machining unit which corresponds to a machining shape model having no duplication with a machining shape model which corresponds to the edited machining unit based on a first non-edited machining unit which is a machining unit other than the edited machining unit out of the plurality of machining units which configure the first machining program; and a second machining program generating step for generating a second machining program including the edited machining unit and the second non-edited machining unit.

A numerical control programming device is characterized by comprising: an input section; a machining unit editor for generating an edited machining unit by editing, based on an input from the input section, at least one machining unit out of a plurality of machining units which configure a first machining program generated based on a first material shape model and a product shape model; a second non-edited machining unit generator for generating a second non-edited machining unit which corresponds to a machining shape model having no duplication with a machining shape model which corresponds to the edited machining unit based on a first non-edited machining unit which is a machining unit other than the edited machining unit out of the plurality of machining units which configure the first machining program; and a second machining program generator for generating a second machining program including the edited machining unit and the second non-edited machining unit.

A numerical control program is characterized by making a computer execute: a machining unit editing step for generating an edited machining unit by editing, based on an input, at least one machining unit out of a plurality of machining units which configure a first machining program generated based on a first material shape model and a product shape model; a second non-edited machining unit generating step for generating a second non-edited machining unit which corresponds to a machining shape model having no duplication with a machining shape model which corresponds to the edited machining unit based on a first non-edited machining unit which is a machining unit other than the edited machining unit out of the plurality of machining units which configure the first machining program; and a second machining program generating step for generating a second machining program having the edited machining unit and the second non-edited machining unit.

A numerical control apparatus is characterized by comprising a memory for storing the above-described numerical control program, and by controlling an external machine tool by executing the numerical control program.

Advantageous Effects of the Invention

In the present invention, a machining program superior in machining efficiency can be generated without having useless duplication of machining areas even when an operator edits machining units.

Brief Description of the Drawings

Fig. 1 is a block diagram showing a machining system in which a numerical control device programming device 1 according to Embodiment 1 is applied.

Fig. 2 is a diagram for describing examples of a material shape 40, a product shape 41, and machined shapes 42a and 42b.

Fig. 3 is a block diagram of a machining unit.

Fig. 4 is a diagram showing data contents of the machining unit.

Fig. 5 is a block diagram showing a configuration of the numerical control programming device 1 according to Embodiment 1.

Fig. 6 is a flow chart showing an outline of processing of the numerical control programming device 1 according to Embodiment 1.

Fig. 7 is a perspective view of a product shape solid model 300 according to Embodiment 1.

Fig. 8 is a perspective view of a material shape solid model 301 according to Embodiment 1.

Fig. 9 is a flow chart showing processing of a material shape generator 209 according to Embodiment 1.

Fig. 10 is a flow chart showing processing of a product shape arranging section 206 according to Embodiment 1.

Fig. 11 is a cross sectional view of the product shape solid model 300 and the material shape solid model 301 according to Embodiment 1.

Fig. 12 is a flow chart showing processing of a machining cross sectional shape generator 214 according to Embodiment 1.

Fig. 13 is a diagram for describing a process to generate a turning inclusion shape solid model 322 from the product shape solid model 300.

Fig. 14 is a diagram for describing a process to generate a turning machining cross sectional shape 332 from the turning inclusion shape solid model 322.

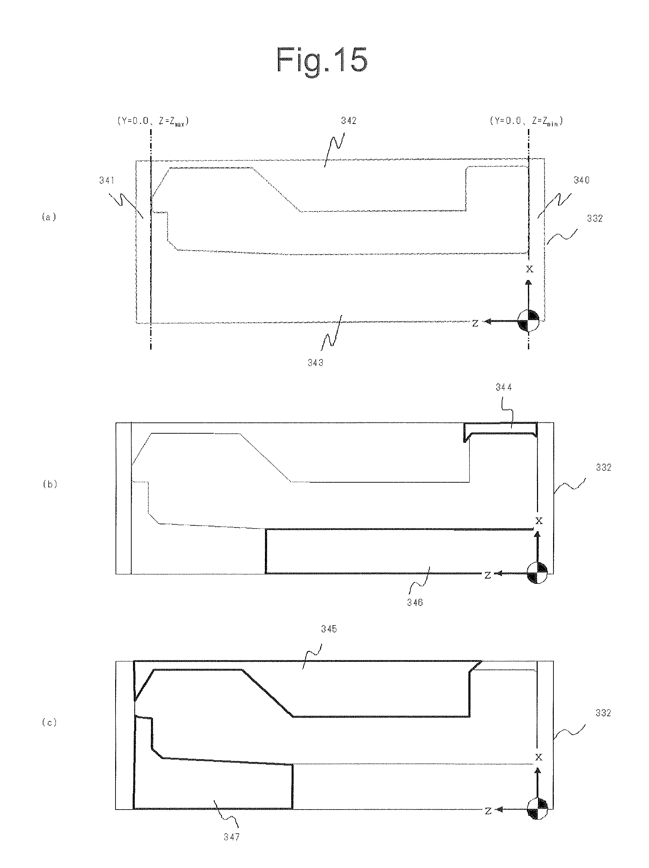

Fig. 15 is a diagram for describing a process to generate, from the turning cross sectional shape sheet model 332, a turning front surface machining cross sectional shape sheet model 340, a turning back surface machining cross sectional shape sheet model 341, a first process turning outer surface machining cross sectional shape sheet model 344, a second process turning outer surface machining cross sectional shape sheet model 345, a first process turning inner surface machining cross sectional shape sheet model 346, and a second process turning inner surface machining cross sectional shape sheet model 347.

Fig. 16 is a diagram for describing a process to generate a machining shape solid model 350 and a milling shape solid model 351 from the material shape solid model 301.

Fig. 17 is a flow chart showing processing performed by the machining cross sectional shape generator 214 in S407 in Fig. 12.

Fig. 18 is a flow chart showing processing performed by the machining cross sectional shape generator 214 in S408 in Fig. 12.

Fig. 19 is a diagram for describing a process to generate the first process turning outer surface machining cross sectional shape sheet model 344 and the second process turning outer surface machining cross sectional shape sheet model 345 from a turning outer surface machining cross sectional shape sheet model 342.

Fig. 20 is a flow chart showing processing performed by the machining cross sectional shape generator 214 in S409 in Fig. 12.

Fig. 21 is a diagram for describing a process to generate the first process turning inner surface machining cross sectional shape sheet model 346 and the second process turning inner surface machining cross sectional shape sheet model 347 from a turning inner surface machining cross sectional shape sheet model 343.

Fig. 22 is a flow chart showing processing of a machining unit generator 216 according to Embodiment 1, and corresponds to S 106 in Fig. 6.

Fig. 23 is a diagram for describing a process to generate a first process turning front surface machining unit 352 and a second process turning back surface machining unit 354.

Fig. 24 is a diagram for describing a process to generate a first process turning bar outer surface machining unit 356, a second process turning bar outer surface machining unit 358, a first process turning bar inner surface machining unit 360, and a second process turning bar inner surface machining unit 362.

Fig. 25 is a diagram for describing a process to generate first process hole drilling units 378a through 378d, second process hole drilling units 378e through 378j, and second process surface machining units 383a through 383h.

Fig. 26 is a flow chart showing processing of a machining program generator 218 according to Embodiment 1.

Fig. 27 is a machining unit tree diagram showing hierarchically a plurality of machining units, in the order of the machining, which configure a machining program 390 generated by the machining program generator 218 according to Embodiment 1.

Fig. 28 is a diagram for describing processing of a machining unit editor 219 according to Embodiment 1.

Fig. 29 is a flow chart showing processing of a machining shape generator 221 according to Embodiment 1.

Fig. 30 is a diagram for describing a process in which the machining shape generator 221 according to Embodiment 1 generates a first process turning front surface machining shape solid model 401 and a second process turning back surface machining shape solid model 402.

Fig. 31 is a diagram for describing a process in which the machining shape generator 221 according to Embodiment 1 generates a first process turning bar outer surface machining shape solid model 420 and a second process turning bar outer surface machining shape solid model 410.

Fig. 32 is a diagram for describing a process in which the machining shape generator 221 according to Embodiment 1 generates a first process turning bar inner surface machining shape solid model 435 and a second process turning bar inner surface machining shape solid model 440.

Fig. 33 is a diagram for describing a process in which the machining shape generator 221 according to Embodiment 1 generates second process surface machining shape solid models 451a through 451h.

Fig. 34 is a diagram for describing a process in which the machining shape generator 221 according to Embodiment 1 generates first process hole drilling shape solid models 454a through 454d and second process hole drilling shape solid models 454e through 454j.

Fig. 35 is a flow chart showing processing of a material shape regenerator 223 according to Embodiment 1.

Fig. 36 is a diagram showing a material shape solid model 462 generated by the material shape regenerator 223 according to Embodiment 1.

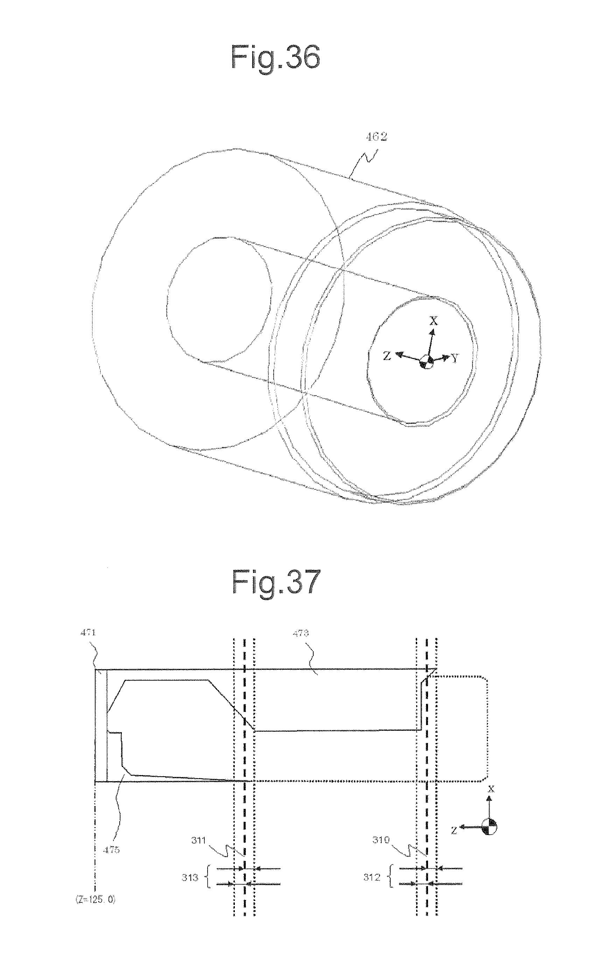

Fig. 37 is a diagram showing a turning front surface machining cross sectional shape sheet model 470, a turning back surface machining cross sectional shape sheet model 471, a first process turning outer surface machining cross sectional shape sheet model 472, a second process turning outer surface machining cross sectional shape sheet model 473, a first process turning inner surface machining cross sectional shape sheet model 474, and a second process turning inner surface machining cross sectional shape sheet model 475 generated by a machining cross sectional shape regenerator 225 according to Embodiment 1.

Fig. 38 is a flow chart showing processing of a machining program regenerator 229 according to Embodiment 1.

Fig. 39 is a machining unit tree diagram showing hierarchically a plurality of machining units, in the order of the machining, which configure a machining program 490 generated by the machining program regenerator 229 according to Embodiment 1.

Fig. 40 is a machining unit tree diagram showing hierarchically a plurality of machining units, in the order of the machining, which configure a machining program 493 generated by the machining program regenerator 229 according to Embodiment 1.

Reference Numerals

1: numerical control programming device, 3: machining program, 5: numerical control apparatus, 6: machine tool, 201: display section, 203: data input section, 219: machining unit editor, 221: machining shape generator, 223: material shape regenerator, 225: machining cross sectional shape regenerator, 227: machining unit regenerator, 229: machining program regenerator, 300: product shape solid model, and 301, 462: material shape solid models.

Best mode for carrying out the Invention

Embodiment 1.

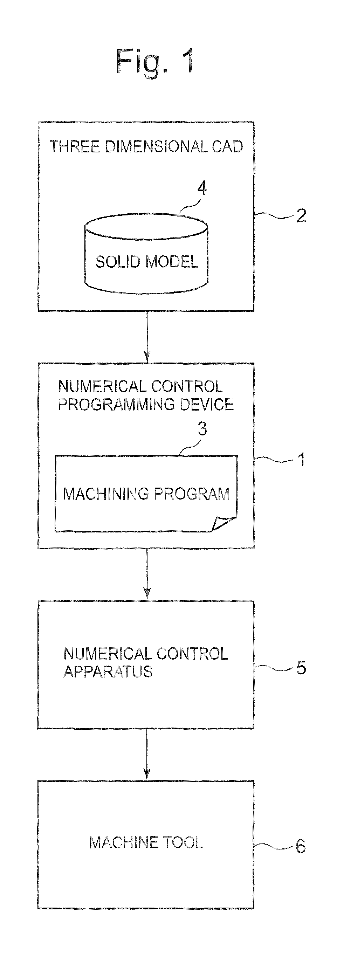

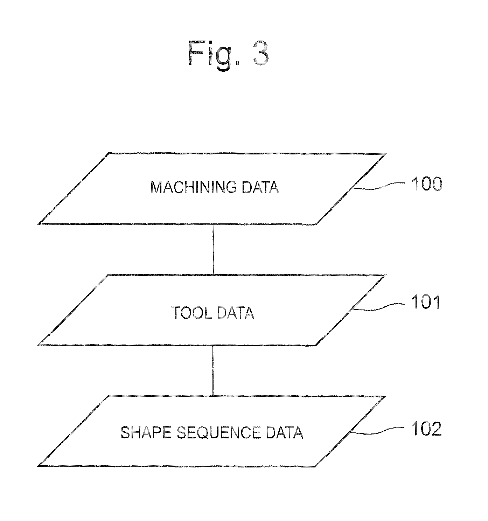

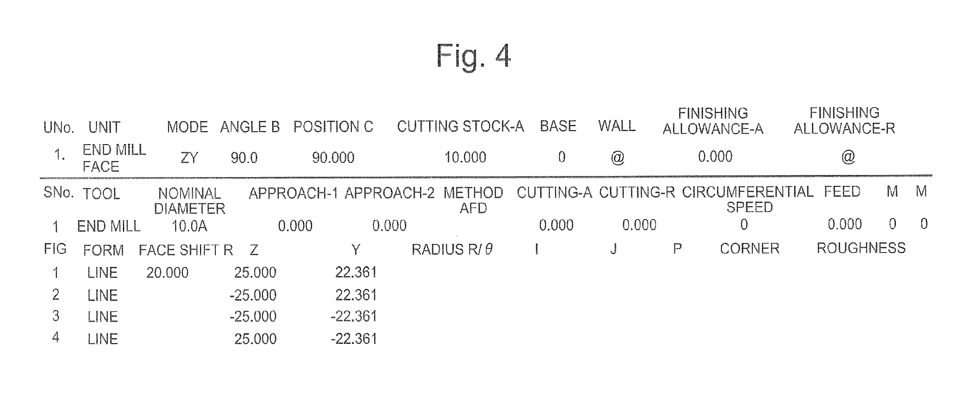

Embodiment 1 of the present invention will be described by referring to Figs. 1 through 40.
Fig. 1 is a block diagram showing a machining system to which a numerical control device programming device 1 according to Embodiment 1 is applied. The machining system shown in Fig. 1 includes a three dimensional CAD 2 for generating solid models 4, i.e. CAD data, based on operation by an operator, and the numerical control programming device 1 for generating a machining program 3 based on the solid models 4. The machining program 3 generated by the numerical control programming device 1 is stored in a memory (not shown) equipped in a numerical control apparatus 5. The numerical control apparatus 5 controls a machine tool 6 by executing the machining program 3 stored in the memory. The machine tool 6 is a combined machining machine tool which is equipped with a principal main spindle, an auxiliary main spindle, and a milling spindle, and performs turning and milling. Here, the solid model is a three dimensional shape model. The turning is machining performed by relatively moving a non-rotating tool against a rotating workpiece. The milling is machining performed by relatively moving a rotating tool against a non-rotating workpiece.

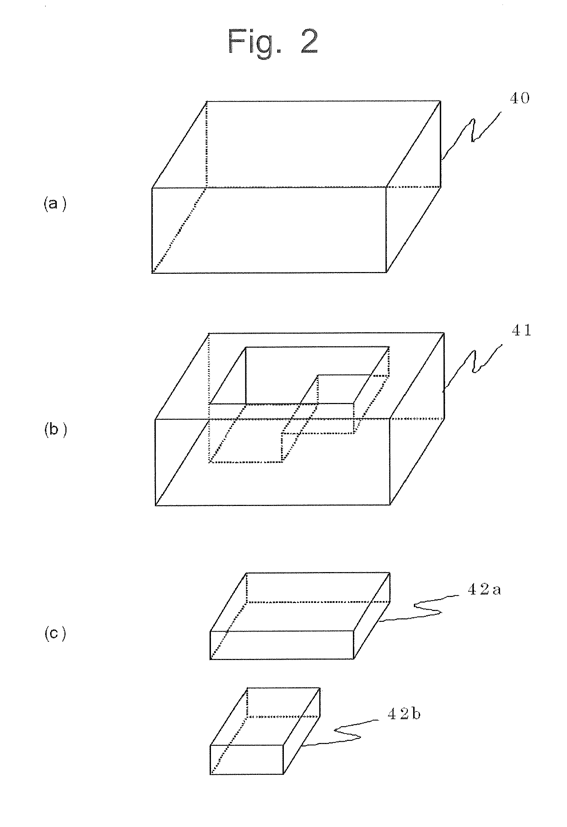

Fig. 2 is a diagram for describing examples of a material shape 40, a product shape 41, and machined shapes 42a and 42b. The solid models 4 generated by the three dimensional CAD 2 shown in Fig. 1 include a solid model of the material shape 40 shown in Fig. 2 (a) and a solid model of the product shape 41 shown in Fig. 2 (b). Here, the material shape means a shape of a workpiece before being machined. The product shape means a shape of the workpiece after being machined. Fig. 2 (c) shows the machined shapes 42a and 42b. Here, a machined shape corresponds to a difference between the material shape and the product shape, and means a shape of the workpiece to be removed by machining. In the example shown in Fig. 2, the numerical control programming device 1 generates the machining program 3 for removing the machined shape 42a and machined shape 42b by the machining.
Next, a machining unit which is a component of the machining program 3 will be described by referring to Figs. 3 and 4. Fig. 3 is a block diagram of a machining unit. Fig. 4 is a diagram showing data contents of the machining unit. The machining program 3 is configured with one or more machining units. The machining unit means a unit of machining in which a continuous machining is performed by the same main spindle and by using the same tool. The machining unit includes machining data 100 containing machining method information, tool data 101 containing information of tools to be used in the machining and cutting conditions, and shape sequence data 102 containing shape information defining a machined shape configured by a simple shape. In Fig. 4, a portion shown as "UNo." at an upper part corresponds to the machining data 100, a portion shown as "SNo." at a middle part corresponds to the tool data 101, and a portion shown as "FIG" at a lower part corresponds to the sequence data 102.

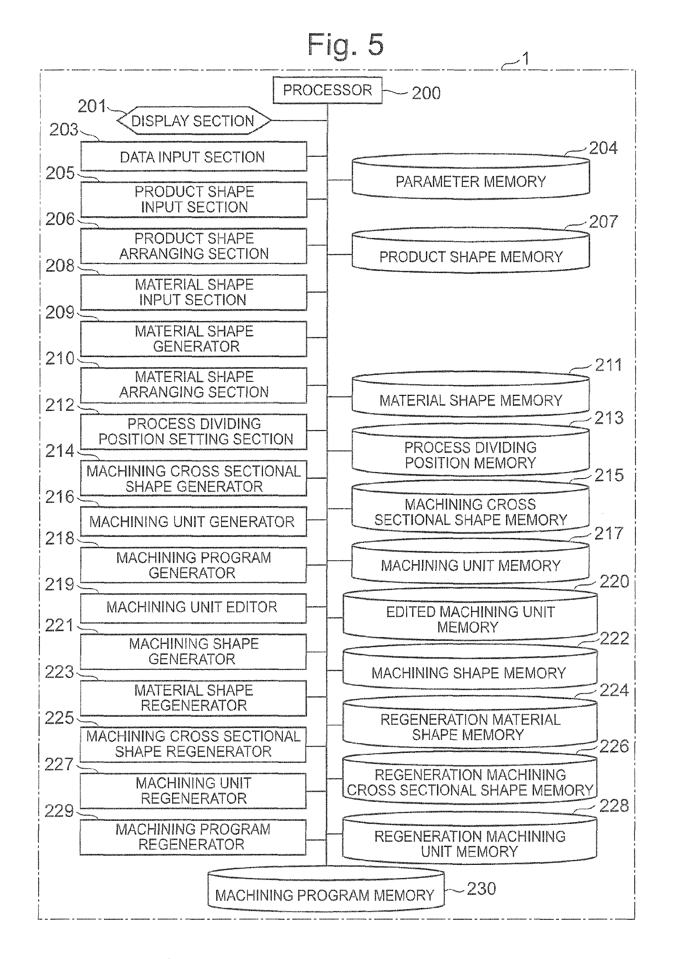

Fig. 5 is a block diagram showing a configuration of the numerical control programming device 1 according to Embodiment 1. A processor 200 is configured with, for example, a CPU, and totally controls the numerical control programming device 1. A display section 201 displays various kinds of data, machining programs, and the like.
An operator can input parameters used for generating machining programs through an input section 203 configured with a mouse, a keyboard, or the like. The parameters inputted from the data input section 203 are stored in a parameter memory 204.
The operator can also input, through a product shape input section 205, a product shape solid model generated by the three dimensional CAD 2. The product shape solid model inputted through the product shape input section 205 is arranged on program coordinates by a product shape arranging section 206. The product shape solid model arranged on program coordinates by the product shape arranging section 206 is stored in a product shape memory 207.
The operator can also input, through a material shape input section 208, a material shape solid model generated by the three dimensional CAD 2. The material shape solid model inputted through the material shape input section 208 is arranged on the program coordinates by a material shape arranging section 210.
A material shape generator 209 generates a material shape solid model based on the product shape solid model stored in the product shape memory 207. The material shape solid model generated by the material shape generator 209 is arranged on the program coordinates by the material shape arranging section 210. The material shape solid model arranged on the program coordinates by the material shape arranging section 210 is stored in a material shape memory 211. Note that the numerical control programming device 1 may only include either of the material shape input section 208 or the material shape generator 209.

A process dividing position setting section 212 sets, based on operation of the operator, an outer surface process dividing position, an inner surface process dividing position, an outer surface process division overlapping amount, and an inner surface process division overlapping amount, which will be described later. The outer surface process dividing position, the inner surface process dividing position, the outer surface process division overlapping amount, and the inner surface process division overlapping amount set by the process dividing position setting section 212 are stored in a process dividing position memory 213.

A machining cross sectional shape generator 214 generates, based on the product shape solid model stored in the product shape memory 207, the material shape solid model stored in the material shape memory 211, the outer surface process dividing position, the inner surface process dividing position, the outer surface process division overlapping amount, and the inner surface process division overlapping amount stored in the process dividing position memory 213, a turning front surface machining cross sectional shape sheet model, a turning back surface machining cross sectional shape sheet model, a first process turning outer surface machining cross sectional shape sheet model, a second process turning outer surface machining cross sectional shape sheet model, a first process turning inner surface machining cross sectional shape sheet model, and a second process turning inner surface machining cross sectional shape sheet model which will be described later. The machining cross sectional shape sheet models generated by the machining cross sectional shape generator 214 are stored in a machining cross sectional shape memory 215. Here, a sheet model means a two dimensional shape model.

A machining unit generator 216 generates, based on the machining cross sectional shape sheet models stored in the machining shape memory 215, a first process turning front surface machining unit, a second process turning back surface machining unit, a first process turning bar outer surface machining unit, a second process turning bar outer surface machining unit, a first process turning bar inner surface machining unit, and a second process turning bar inner surface machining unit which will be described later. The machining unit generator 216 also generates, based on a milling shape solid model stored in a machining shape memory 215, a first process hole drilling unit, a second process hole drilling unit, a first process surface machining unit, and a second process surface machining unit which will be described later. The machining units generated by the machining unit generator 216 are stored in a machining unit memory 217.

A machining program generator 218 generates a machining program based on the machining units in the machining unit memory 217. The machining program generated by the machining program generator 218 is stored in a machining program memory 230.

A machining unit editor 219 edits machining units configuring the machining program stored in the machining program memory 230. The machining units edited by the machining unit editor 219 are stored in an edited machining unit memory 220.

A machining shape generator 221 generates, based on the machining units stored in the machining unit memory 217 or the edited machining unit memory 220, a first process turning front surface machining shape solid model, a second process turning back surface machining shape solid model, a first process turning bar outer surface machining shape solid model, a second process turning bar outer surface machining shape solid model, a first process turning bar inner surface machining shape solid model, a second process turning bar inner surface machining shape solid model, a first process surface machining shape solid model, a second process surface machining shape solid model, a first process hole drilling shape solid model, and a second process hole drilling shape solid model which will be described later. The machining shape solid models generated by the machining shape generator 221 are stored in the machining shape memory 222.

A material shape regenerator 223 regenerates a material shape solid model based on the material shape solid model stored in the material shape memory 210, the machining shape solid models stored in the machining shape memory 222, the machining units stored in the machining unit memory 217 or the edited machining unit memory 220, and the machining program stored in the machining program memory 230. The material shape solid model generated by the material shape regenerator 223 is stored in a material shape memory 224.

A machining cross sectional shape regenerator 225 regenerates, based on the product shape solid model stored in the product shape memory 207, the material shape solid model stored in the material shape memory 224, and the outer surface process dividing position, the inner surface process dividing position, the outer surface process division overlapping amount, and the inner surface process division overlapping amount stored in the process dividing position memory 213, a turning front surface machining cross sectional shape sheet model, a turning back surface machining cross sectional shape sheet model, a first process turning outer surface machining cross sectional shape sheet model, a second process turning outer surface machining cross sectional shape sheet model, a first process turning inner surface machining cross sectional shape sheet model, and a second process turning inner surface machining cross sectional shape sheet model which will be described later. The machining cross sectional shape sheet models generated by the machining cross sectional shape regenerator 225 are stored in a regeneration machining cross sectional shape memory 226.

A machining unit regenerator 227 generates, based on the machining cross sectional shape sheet models stored in the regeneration machining cross sectional shape memory 226, a first process turning front surface machining unit, a second process turning back surface machining unit, a first process turning bar outer surface machining unit, a second process turning bar outer surface machining unit, a first process turning bar inner surface machining unit, and a second process turning bar inner surface machining unit which will be described later. The machining unit regenerator 227 also regenerates, based on a milling shape solid model stored in the regeneration machining cross sectional shape memory 226, a first process hole drilling unit, a second process hole drilling unit, a first process surface machining unit, and a second process surface machining unit which will be described later. The machining units generated by the machining unit regenerator 227 are stored in a regeneration machining unit memory 228.

A machining program regenerator 229 regenerates a machining program based on the machining units stored in the regeneration machining unit memory 228. The machining program generated by the machining program regenerator 229 is stored in the machining program memory 230.

Note that the data input section 203, product shape input section 205, and material shape input section 208 may be configured with a common input device, or each of them may be configured with an independent input device. Also, the parameter memory 204, product shape memory 207, material shape memory 211, process dividing position memory 213, machining cross sectional shape memory 215, machining unit memory 217, edited machining unit memory 220, machining shape memory 222, material shape memory 224, regeneration machining cross sectional shape memory 226, regeneration machining unit memory 228, and machining program memory 230 may be configured with a common memory device, or each of them may be configured with an independent memory device. In addition, these memories may be included in advance in the numerical control programming device 1, or may be configured with an external memory equipped removably.

Furthermore, the product shape arranging section 206, material shape generator 209, process dividing position setting section 212, machining cross sectional shape generator 214, machining unit generator 216, machining program generator 218, machining unit editor 219, machining shape generator 221, material shape regenerator 223, machining cross sectional shape regenerator 225, machining unit regenerator 227, and machining program regenerator 229 are substantialized by the processor 200 which executes system programs stored in advance in the numerical control programming device 1.

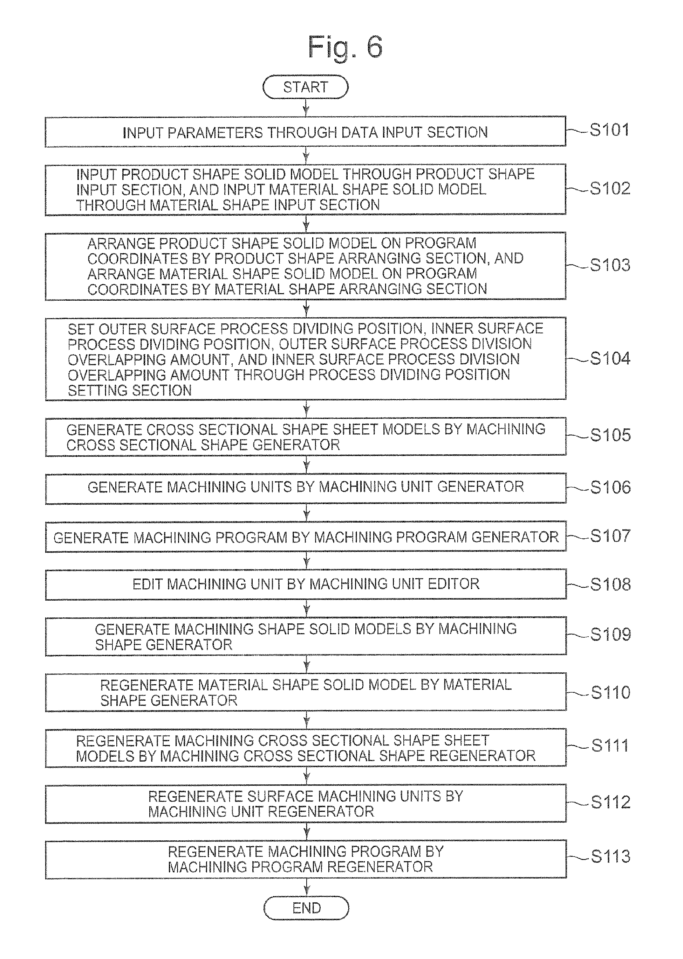

Next, processing in the numerical control programming device 1 according to Embodiment 1 will be described by referring to Figs. 6 through 40. Fig. 6 is a flow chart showing an outline of processing of the numerical control programming device 1 according to Embodiment 1. First, the operator inputs, through the data input section 203, parameters to be used in machining program generation (Step S101). Here, as the parameters, for example, a radial direction machining margin 302, an end face cutting stock 303, and the like which will be described later, are inputted. The parameters inputted through the data input section 203 are stored in the parameter memory 204.

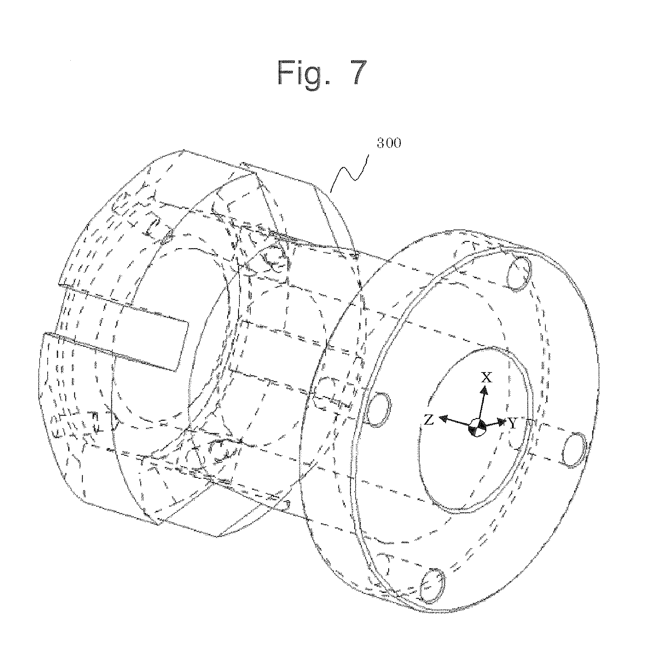

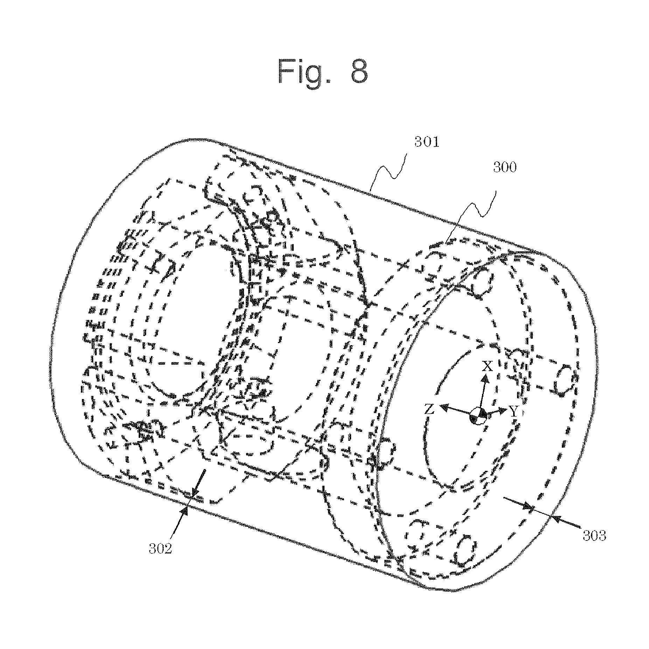

Next, the operator inputs, through the product shape input section 205, a product shape solid model 300 generated by the three dimensional CAD 2. The operator also inputs, through the material shape input section 208, a material shape solid model 301 generated by the three dimensional CAD 2 (Step S102). Fig. 7 is a perspective view of the product shape solid model 300 according to Embodiment 1. Fig. 8 is a perspective view of the material shape solid model 301 according to Embodiment 1. In Fig. 8, the product shape solid model 300 is shown in dotted lines and the material shape solid model 301 is shown in a solid line.

Note that, in S102, the material shape solid model 301 may be generated by the material shape generator 209, instead of inputting the material shape solid model 301 by the operator through the material shape input section 208. Processing by the material shape generator 209 in S102 will be described later.

After that, the product shape arranging section 206 arranges the product shape solid model 300 on program coordinates. Also, the material shape arranging section 210 arranges the material shape solid model 301 on the program coordinates (Step S103). Processing by the product shape arranging section 206 and the material shape arranging section 210 in S103 will be described later. The product shape solid model 300 is stored in the product shape memory 207, and the material shape solid model 301 is stored in the material shape memory 211.

And then, the operator sets, through the process dividing position setting section 212, an outer surface process dividing position 310, an inner surface process dividing position 311, an outer surface process division overlapping amount 312, and an inner surface process division overlapping amount 313 (Step S104). The outer surface process dividing position 310, the inner surface process dividing position 311, the outer surface process division overlapping amount 312, and the inner surface process division overlapping amount 313 are stored in the process dividing position memory 213.

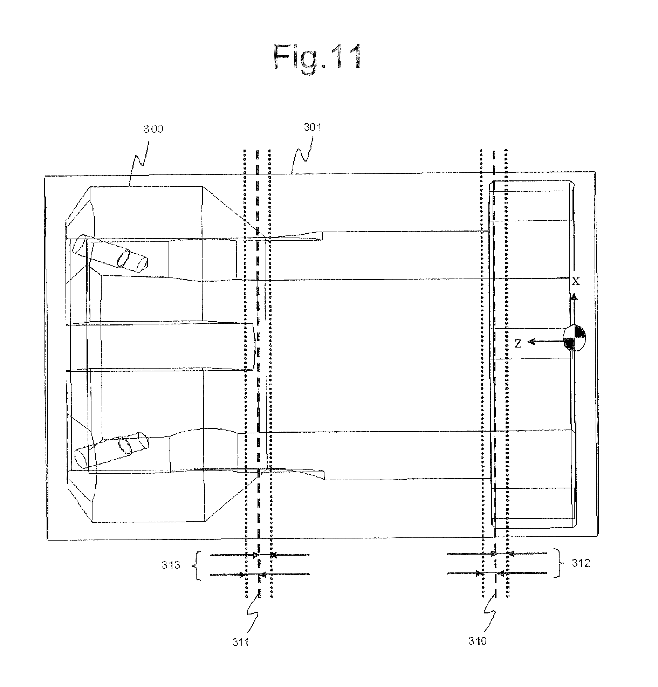

Here, the outer surface process dividing position 310, the inner surface process dividing position 311, the outer surface process division overlapping amount 312, and the inner surface process division overlapping amount 313 will be described by referring to Fig. 11. Fig. 11 is a cross sectional view of the product shape solid model 300 and the material shape solid model 301 according to Embodiment 1. The outer surface process dividing position 310 is a coordinate value on a Z axis for defining a boundary between a portion machined in a first process and a portion machined in a second process at an outer surface side of the product shape solid model 300. The inner surface process dividing position 311 is a coordinate value on the Z axis for defining a boundary between a portion machined in the first process and a portion machined in the second process at an inner surface side of the product shape solid model 300. Here, the first process means a process in which a gripped workpiece is machined by a principal main spindle of the machine tool 6, and the second process means a process, after the first process, in which the gripped workpiece is machined by an auxiliary main spindle of the machine tool 6. Also, the outer surface means an outer side of the workpiece based on the Z axis which is a turning axis, and the inner surface means an inner side of the workpiece based on the Z axis which is a turning axis.

The outer surface process division overlapping amount 312 is a length in a Z axis direction in which a portion machined in a first process overlaps with a portion machined in a second process at an outer surface side of the product shape solid model 300. The inner surface process division overlapping amount 313 is a length in the Z axis direction in which a portion machined in a first process overlaps with a portion machined in a second process at an inner surface side of the product shape solid model 300.

Since an edge of a tool in the machine tool 6 is usually round-shaped, when the outer surface process division overlapping amount 312 and the inner surface process division overlapping amount 313 are not set, there is a possibility of generating a portion left uncut on the workpiece. By setting the outer surface process division overlapping amount 312 and the inner surface process division overlapping amount 313, generation of the portion left uncut on the workpiece can be prevented.

Next, the machining cross sectional shape generator 214 generates a turning front surface machining cross sectional shape sheet model 340, a turning back surface machining cross sectional shape sheet model 341, a first process turning outer surface machining cross sectional shape sheet model 344, a second process turning outer surface machining cross sectional shape sheet model 345, a first process turning inner surface machining cross sectional shape sheet model 346, and a second process turning inner surface machining cross sectional shape sheet model 347 which will be described later (Step S105). Processing by the machining cross sectional shape generator 214 in S105 will be described later.

The turning front surface machining cross sectional shape sheet model 340, the turning back surface machining cross sectional shape sheet model 341, the first process turning outer surface machining cross sectional shape sheet model 344, the second process turning outer surface machining cross sectional shape sheet model 345, the first process turning inner surface machining cross sectional shape sheet model 346, and the second process turning inner surface machining cross sectional shape sheet model 347 are stored in the machining cross sectional shape memory 215.

After that, the machining unit generator 216 generates a first process turning front surface machining unit 352, a second process turning back surface machining unit 354, a first process turning bar outer surface machining unit 356, a second process turning bar outer surface machining unit 358, a first process turning bar inner surface machining unit 360, a second process turning bar inner surface machining unit 362, first process hole drilling units 378a through 378d, second process hole drilling units 378e through 378j, and second process surface machining units 383a through 383h which will be described later (Step S106). Processing by the machining unit generator 216 in S106 will be described later.

The first process turning front surface machining unit 352, the second process turning back surface machining unit 354, the first process turning bar outer surface machining unit 356, the second process turning bar outer surface machining unit 358, the first process turning bar inner surface machining unit 360, the second process turning bar inner surface machining unit 362, the first process hole drilling units 378a through 378d, the second process hole drilling units 378e through 378j, and the second process surface machining units 383a through 383h are stored in the machining unit memory 217.

And then, the machining program generator 218 generates a machining program 390 which will be described later (Step S107). Processing by the machining program generator 218 in S107 will be described later. The machining program 390 is stored in the machining program memory 230.

Next, the machining unit editor 219 edits machining units configuring the machining program 390 stored in the machining program memory 230 (Step S108). Processing by the machining unit editor 219 in S108 will be described later. The machining units edited by the machining unit editor 219 are stored in the edited machining unit memory 220.

After that, the machining shape generator 221 generates a first process turning front surface machining shape solid model 401, a second process turning back surface machining shape solid model 402, a first process turning bar outer surface machining shape solid model 420, a second process turning bar outer surface machining shape solid model 410, a first process turning bar inner surface machining shape solid model 435, a second process turning bar inner surface machining shape solid model 440, second process surface machining shape solid models 451a through 451h, first process hole drilling shape solid models 454a through 454d, and second process hole drilling shape solid models 454e through 454j which will be described later (Step S109). Processing by the machining shape generator 221 in S109 will be described later.

The first process turning front surface machining shape solid model 401, the second process turning back surface machining shape solid model 402, the first process turning bar outer surface machining shape solid model 420, the second process turning bar outer surface machining shape solid model 410, the first process turning bar inner surface machining shape solid model 435, the second process turning bar inner surface machining shape solid model 440, the second process surface machining shape solid models 451a through 451h, the first process hole drilling shape solid models 454a through 454d, and the second process hole drilling shape solid models 454e through 454j are stored in the machining shape memory 222.

And then, the material shape regenerator 223 generates a material shape solid model 462 which will be described later (Step S110). Processing by the material shape regenerator 223 in S110 will be described later. The material shape solid model 462 is stored in the material shape memory 224.

Next, the machining cross sectional shape regenerator 225 generates a turning back surface machining cross sectional shape sheet model 471, a second process turning outer surface machining cross sectional shape sheet model 473, and a second process turning inner surface machining cross sectional shape sheet model 475 which will be described later (Step S111). Processing by the machining cross sectional shape regenerator 225 in S111 will be described later.

The turning back surface machining cross sectional shape sheet model 471, the second process turning outer surface machining cross sectional shape sheet model 473, and the second process turning inner surface machining cross sectional shape sheet model 475 are stored in the regeneration machining cross sectional shape memory 226.

After that, the machining unit regenerator 227 generates a second process turning back surface machining unit 481, a second process turning bar outer surface machining unit 483, a second process turning bar inner surface machining unit 485, first process hole drilling units 486a through 486d, second process hole drilling units 487e through 487j, and second process surface machining units 488a through 488h which will be described later (Step S112). Processing by the machining unit regenerator 227 in S 112 will be described later.

The second process turning back surface machining unit 481, the second process turning bar outer surface machining unit 483, the second process turning bar inner surface machining unit 485, the first process hole drilling units 486a through 486d, the second process hole drilling units 487e through 487j, and the second process surface machining units 488a through 488h are stored in the regeneration machining unit memory 228.

And then, the machining program regenerator 229 regenerates a machining program 493 which will be described later (Step S113). Processing by the machining program regenerator 229 in S113 will be described later. The machining program 493 generated by the machining program regenerator 229 is stored in the machining program memory 230. After that, the numerical control programming device 1 terminates its processing.

Furthermore, in Steps S101 through S113 in Fig. 6, the numerical control programming device 1 may display models and machining units to be processed by each of the sections on the display section 201 at arbitrary timing. In this way, the operator can confirm in S109, for example, for a machining unit edited in S108, a machining shape solid model corresponding to the machining unit.

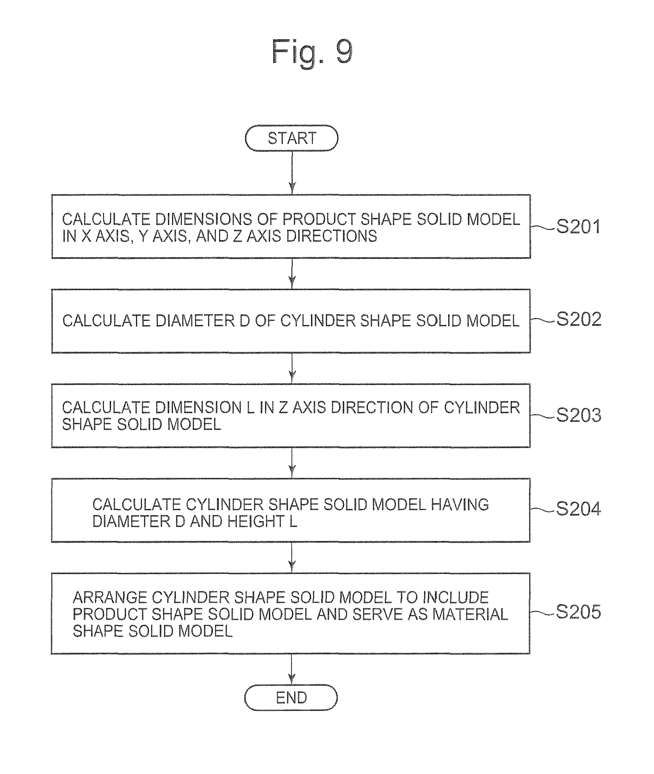

Next, processing in the material shape generator 209 according to Embodiment 1 will be described by referring to Fig. 9. Fig. 9 is a flow chart showing processing of the material shape generator 209 according to Embodiment 1, and corresponds to S102 in Fig. 6. First, the material shape generator 209 calculates dimensions of the product shape solid model 300 in an X axis direction, a Y axis direction, and a Z axis direction by a geometrical analysis (Step S201). Here, the material shape generator 209 calculates the dimension in each of the axis directions by calculating a maximum value and a minimum value in each of the axis directions of the product shape solid model 300.

After that, the material shape generator 209 calculates a diameter D of a cylinder shape solid model which includes the product shape solid model 300 according to the following Formula (1) (Step S202). In Formula (1), Xlen is a dimension of the product shape solid model 300 in the X axis direction, Ylen is a dimension of the product shape solid model 300 in the Y axis direction, and the radial direction machining margin 302 is a value inputted by the operator in S101 in Fig. 6.

$$\text{Diameter D} = \sqrt{\{(\text{Xlen} * \text{Xlen}) + (\text{Ylen} * \text{Ylen})\}} + (\text{Radial direction machining margin 302}) \ldots (1)$$

And then, the material shape generator 209 calculates a dimension L in a Z axis direction of the cylinder shape solid model according to the following Formula (2) (Step S203). Zlen is a dimension of the product shape solid model 300 in the Z axis direction, and the end face cutting stock 303 is a value inputted by the operator in S101 in Fig. 6.

$$\text{Dimension L} = \text{Zlen} + 2.0 * (\text{End face cutting stock 303}) \ldots (2)$$

Next, the material shape generator 209 generates the cylinder shape solid model based on the diameter D calculated by Formula (1) and the dimension L in the Z axis direction calculated by Formula (2) (Step S204).

After that, the material shape generator 209 arranges a central axis of the material shape solid model 301 so that the central axis coincides with the Z axis which is a turning axis. And then, the material shape generator 209 translates the cylinder shape solid model in the Z axis direction so that a Z coordinate value of an end face of the cylinder shape solid model on the Z axis negative side becomes zero. Next, the material shape generator 209 translates the cylinder shape solid model in the Z axis negative direction by the end face cutting stock 303, and the cylinder shape solid model is set as the material shape solid model 301 (Step S205). After that, the material shape generator 209 terminates its processing.

As shown in Fig. 8, a radius of the material shape solid model 301 is larger than a radius of the product shape solid model 300 by the radial direction machining margin 302. Also, both end faces of the material shape solid model 301 in the Z axis direction are positioned to outsides of both end faces of the product shape solid model 300 in the Z axis direction by the end face cutting stock 303. That is, the material shape solid model 301 includes the product shape solid model 300.

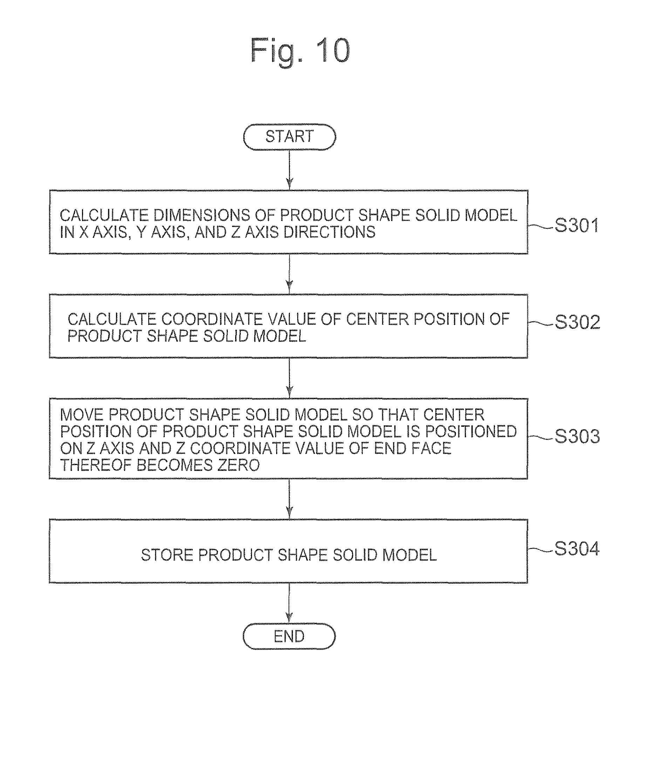

Next, processing in the product shape arranging section 206 and the material shape arranging section 210 according to Embodiment 1 will be described by referring to Fig. 10. Fig. 10 is a flow chart showing processing of the product shape arranging section 206 according to Embodiment 1, and corresponds to S103 in Fig. 6. First, the product shape arranging section 206 calculates dimensions of the product shape solid model 300 in an X axis direction, a Y axis direction, and a Z axis direction by a geometrical analysis (Step S301). Here, the product shape arranging section 206 calculates the dimension in each of the axis directions by calculating a maximum value and a minimum value in each of the axis directions of the product shape solid model 300.

After that, the product shape arranging section 206 calculates a center position in each of the axis directions based on the dimension in each of the axis directions of the product shape solid model 300, and sets a coordinate value of the center position in each of the axis directions as a coordinate value of the center position of the product shape solid model 300 (Step S302).

And then, the product shape arranging section 206 moves the product shape solid model 300 so that the center position of the product shape solid model 300 is positioned on the Z axis. Next, the product shape arranging section 206 translates the product shape solid model 300 so that a Z coordinate value of an end face of the product shape solid model 300 on the Z axis negative side becomes zero. In this way, the product shape solid model 300 is arranged on the program coordinates. Next, the product shape arranging section 206 stores the product shape solid model 300 in the product shape memory 207 (Step S304). After that, the product shape arranging section 206 terminates its processing.

Meanwhile, while the material shape arranging section 210 performs processing similar to that of the product shape arranging section 206 shown in Fig. 10, the only difference is in S303 and that the material shape solid model 301 is moved so that a coordinate value of a center position of the material shape solid model 301 coincides with a coordinate value of a center position of the product shape solid model 300. Among processing of the material shape arranging section 210, descriptions corresponding to the processing in S301, S302, and S304 in Fig. 10 will be skipped.

Note that part of the processing of the product shape arranging section 206 and the material shape arranging section 210 may be performed by the operator. For example, in S303, the operator may move the product shape solid model 300 on a coordinate system by using arrow keys of a keyboard of the data input section 203 while displaying the product shape solid model 300 on the display section 201.

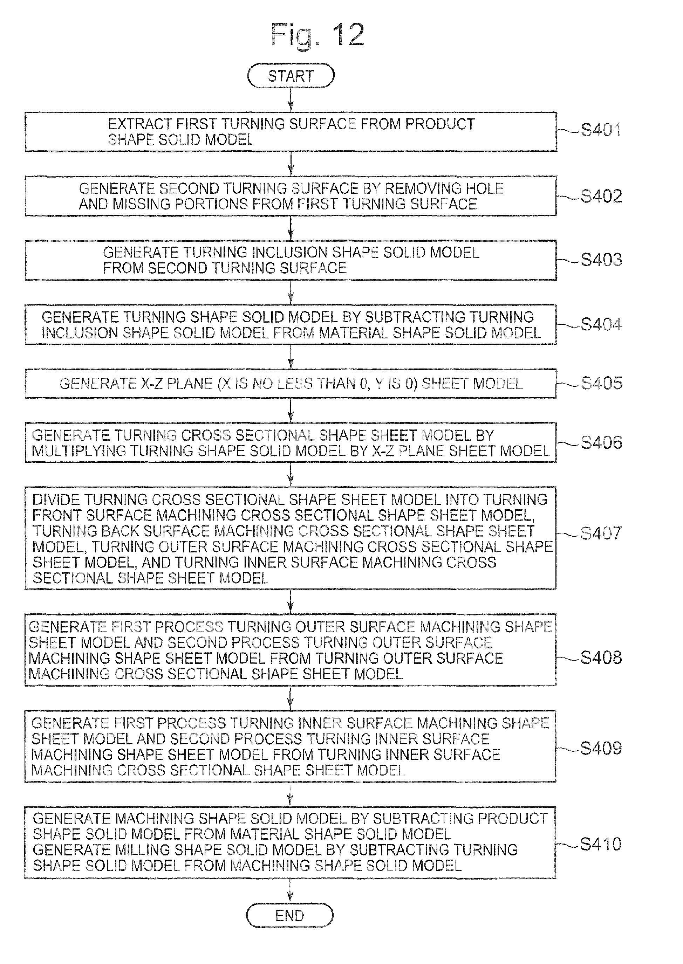

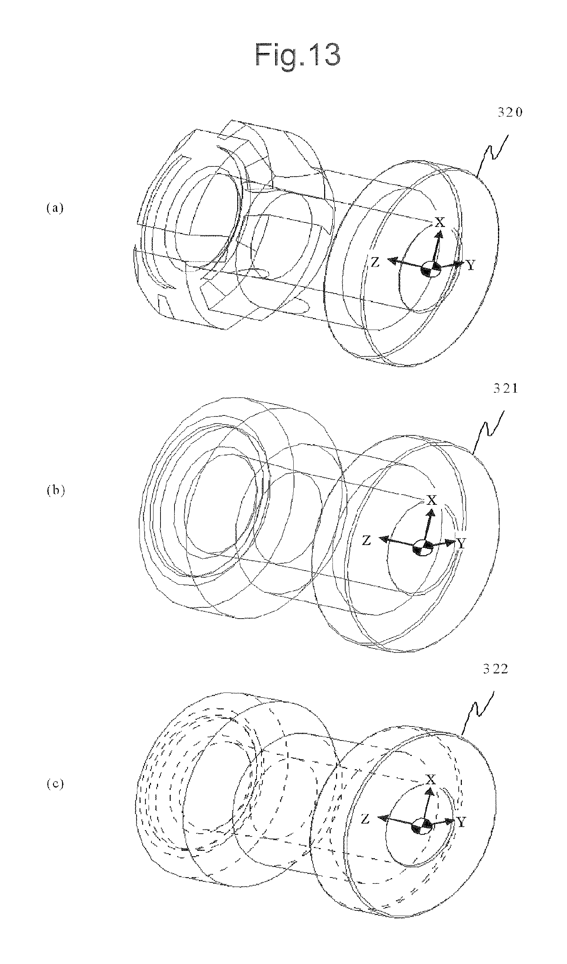

Next, processing in the machining cross sectional shape generator 214 according to Embodiment 1 will be described by referring to Figs. 12 through 21. Fig. 12 is a flow chart showing processing of the machining cross sectional shape generator 214 according to Embodiment 1, and corresponds to S105 in Fig. 6. Fig. 13 is a diagram for describing a process to generate a turning inclusion shape solid model 322 from the product shape solid model 300. First, the machining cross sectional shape generator 214 extracts, based on the product shape solid model 300 stored in the product shape memory 207, a conical (CONE) surface, a cylinder (SYLINDER) surface, and a circle (TORUS) surface which are centralized on the Z axis, i.e. a turning axis, as a first turning surface 320 (Step S401). Fig. 13 (a) is a perspective view showing the first turning surface 320.

Next, the machining cross sectional shape generator 214 generates a second turning surface 321 by removing holes and missing portions from the first turning surface 320 (Step S402). Concretely, the machining cross sectional shape generator 214 first calculates, by geometrically analyzing the first turning surface 320, a minimum value and a maximum value in a v direction in u-v parameter coordinates of the first turning surface 320. Here, the u-v parameter coordinates are coordinates represented by a parameter u which represents an angle in a radial direction and a parameter v in a direction of the Z axis which is the turning axis. Next, the machining cross sectional shape generator 214 generates a second turning surface 321 in which a minimum value and a maximum value in a v direction are equal to the above calculated minimum value and maximum value in the v direction and a value in a u direction is between 0 radian and 2n radian. Fig. 13 (b) is a perspective view showing the second turning surface 321.

After that, the machining cross sectional shape generator 214 generates both end faces of the second turning surface 321 in the v direction, and then generates the turning inclusion shape solid model 322 whose surface is configured with the second turning surface 321 and the both end faces (Step S403). Fig. 13 (c) is a perspective view showing the turning inclusion shape solid model 322. Here, a turning inclusion shape is a shape of including a product shape by a cutting surface without having holes and missing portions.

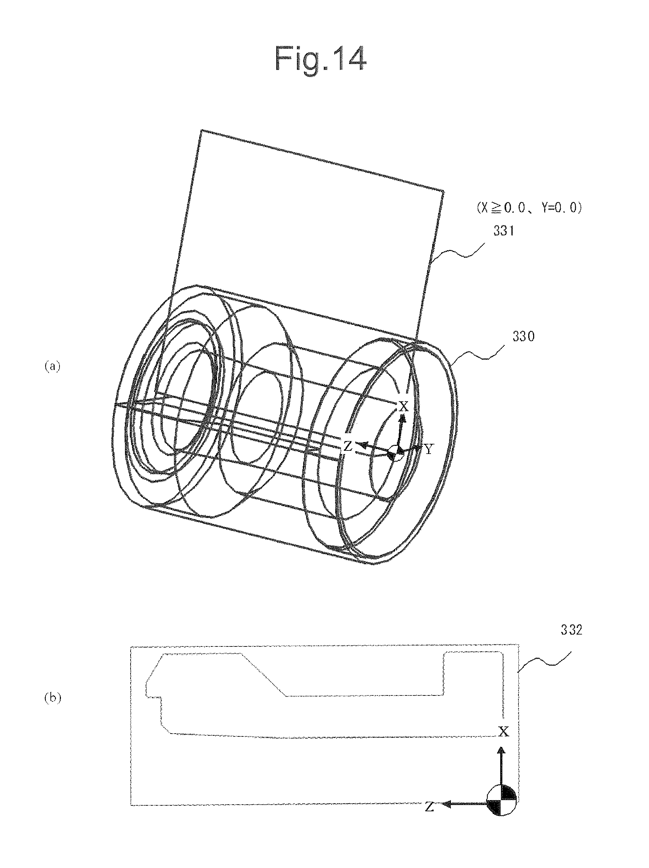

Next, the machining cross sectional shape generator 214 generates a turning shape solid model 330 by performing a subtraction in which the turning inclusion shape solid model 322 is subtracted from the material shape solid model 301 stored in the material shape memory 211 (Step S404). Fig. 14 is a diagram for describing a process to generate a turning cross sectional shape 332 from the turning inclusion shape solid model 322. Fig. 14 (a) is a perspective view showing the turning shape solid model 330. Here, a turning shape corresponds to the difference between a material shape and a turning inclusion shape, and is a shape of workpiece to be removed by the turning.

After that, the machining cross sectional shape generator 214 generates an X-Z plane (X is no less than 0.0, Y is 0.0) sheet model 331 (Step S405).

And then, the machining cross sectional shape generator 214 generates the turning cross sectional shape sheet model 332 by multiplying the turning shape solid model 330 by the X-Z plane sheet model 331 (Step S406). Fig. 14 (b) is a diagram showing the turning cross sectional shape sheet model 332.

Next, the machining cross sectional shape generator 214 divides the turning cross sectional shape sheet model 332 into the turning front surface machining cross sectional shape sheet model 340, the turning back surface machining cross sectional shape sheet model 341, a turning outer surface machining cross sectional shape sheet model 342, and a turning inner surface machining cross sectional shape sheet model 343 (Step S407). Detailed processing by the machining cross sectional shape generator 214 in S407 will be described later. Fig. 15 is a diagram for describing a process to generate, from the turning cross sectional shape sheet model 332, the turning front surface machining cross sectional shape sheet model 340, the turning back surface machining cross sectional shape sheet model 341, the first process turning outer surface machining cross sectional shape sheet model 344, the second process turning outer surface machining cross sectional shape sheet model 345, the first process turning inner surface machining cross sectional shape sheet model 346, and the second process turning inner surface machining cross sectional shape sheet model 347. Fig. 15 (a) is a diagram showing the turning front surface machining cross sectional shape sheet model 340, the turning back surface machining cross sectional shape sheet model 341, the turning outer surface machining cross sectional shape sheet model 342, and the turning inner surface machining cross sectional shape sheet model 343.

After that, the machining cross sectional shape generator 214 generates, based on the outer surface process dividing position 310 and the outer surface process division overlapping amount 312 stored in the process dividing position memory 213, the first process turning outer surface machining cross sectional shape sheet model 344 and the second process turning outer surface machining cross sectional shape sheet model 345 from the turning outer surface machining cross sectional shape sheet model 342 (Step S408). Detailed processing by the machining cross sectional shape generator 214 in S408 will be described later. And then, the machining cross sectional shape generator 214 stores the first process turning outer surface machining cross sectional shape sheet model 344 and the second process turning outer surface machining cross sectional shape sheet model 345 generated in S408 in the machining cross sectional shape memory 215.

Next, the machining cross sectional shape generator 214 generates, based on the inner surface process dividing position 311 and the inner surface process division overlapping amount 313 stored in the process dividing position memory 213, the first process turning inner surface machining cross sectional shape sheet model 346 and the second process turning inner surface machining cross sectional shape sheet model 347 from the turning inner surface machining cross sectional shape sheet model 343 (Step S409). Detailed processing by the machining cross sectional shape generator 214 in S409 will be described later. After that, the machining cross sectional shape generator 214 stores the first process turning inner surface machining cross sectional shape sheet model 346 and the second process turning inner surface machining cross sectional shape sheet model 347 generated in S409 in the machining cross sectional shape memory 215.

Fig. 15 (b) is a diagram showing the first process turning outer surface machining cross sectional shape sheet model 344 and the first process turning inner surface machining cross sectional shape sheet model 346. Fig. 15 (c) is a diagram showing the second process turning outer surface machining cross sectional shape sheet model 345 and the second process turning inner surface machining cross sectional shape sheet model 347.

And then, the machining cross sectional shape generator 214 generates a machining shape solid model 350 by performing a subtraction in which the product shape solid model 300 stored in the product shape memory 207 is subtracted from the material shape solid model 301 stored in the material shape memory 211. Next, the machining cross sectional shape generator 214 generates a milling shape solid model 351 by performing a subtraction in which the turning shape solid model 330 generated in S404 is subtracted from the machining shape solid model 350 by subtraction (Step S410). Here, a milling shape corresponds to the difference between a machining shape and a turning shape, and is a shape of workpiece to be removed by the milling.

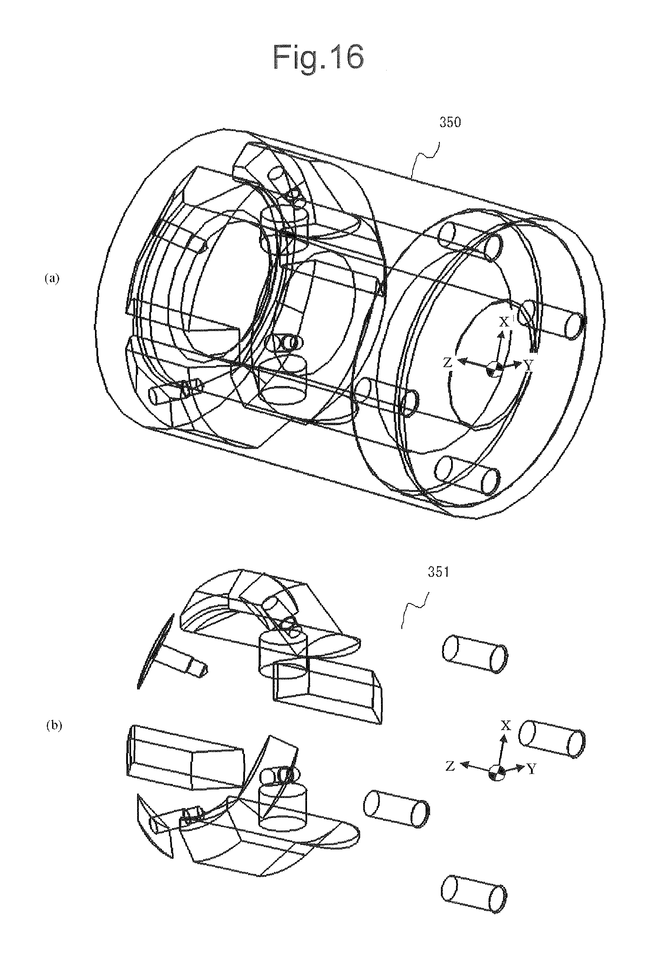

Fig. 16 is a diagram for describing a process to generate the machining shape solid model 350 and the milling shape solid model 351 from the material shape solid model 301. Fig. 16 (a) is a perspective view showing the machining shape solid model 350. Fig. 16 (b) is a perspective view showing the milling shape solid model 351. After that, the machining cross sectional shape generator 214 terminates its processing.

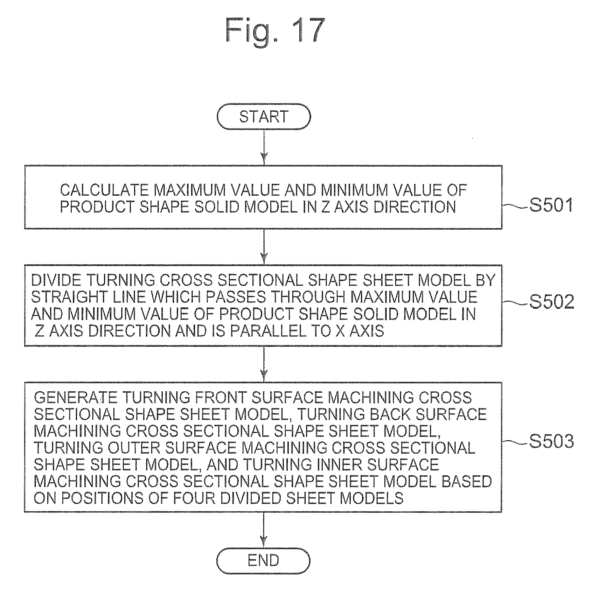

Here, detailed processing by the machining cross sectional shape generator 214 in S407 in Fig. 12 will be described by referring to Figs. 12, 15 (a), and 17. Fig. 17 is a flow chart showing processing performed by the machining cross sectional shape generator 214 in S407 in Fig. 12. First, the machining cross sectional shape generator 214 calculates a maximum value $Z_{max}$ and a minimum value $Z_{min}$ of the product shape solid model 300 in a Z axis direction by geometrically analyzing the product shape solid model 300 stored in the product shape memory 207 (Step S501).

Next, the machining cross sectional shape generator 214 divides the turning cross sectional shape sheet model 332 generated in S406 in Fig. 12 by a straight line ($Z=Z_{max}$, Y=0.0) which passes through the maximum value $Z_{max}$ of the product shape solid model 300 in the Z axis direction and is parallel to an X axis. The machining cross sectional shape generator 214 also divides the turning cross sectional shape sheet model 332 by a straight line ($Z= Z_{min}$, Y=0.0) which passes through the minimum value $Z_{min}$ of the product shape solid model 300 in the Z axis direction and is parallel to the X axis.

Next, the machining cross sectional shape generator 214 calculates positions of sheet models which are divided into four shapes and sets a sheet model, having a shape arranged at a position on the Z axis negative side when viewed from the minimum value $Z_{min}$ in the Z axis direction, as the turning front surface machining cross sectional shape sheet model 340. The machining cross sectional shape generator 214 also sets a sheet model, having a shape arranged at a position on the Z axis positive side when viewed from the maximum value $Z_{max}$ in the Z axis direction, as the turning back surface machining cross sectional shape sheet model 341. And the machining cross sectional shape generator 214 compares positions of two sheet models located between the maximum value $Z_{max}$ and the minimum value $Z_{min}$ in the Z axis direction, and sets a sheet model having a shape located at a larger value in the X axis direction as the turning outer surface machining cross sectional shape sheet model 342. The machining cross sectional shape generator 214 also sets a sheet model having a shape located at a smaller value in the X axis direction as the turning inner surface machining cross sectional shape sheet model 343 (Step S503). After that, the machining cross sectional shape generator 214 terminates S407 processing in Fig. 12.

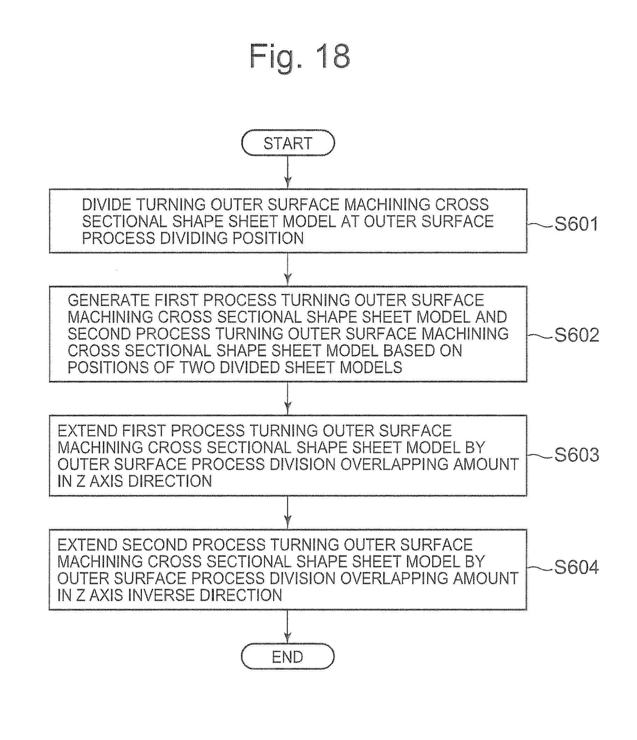

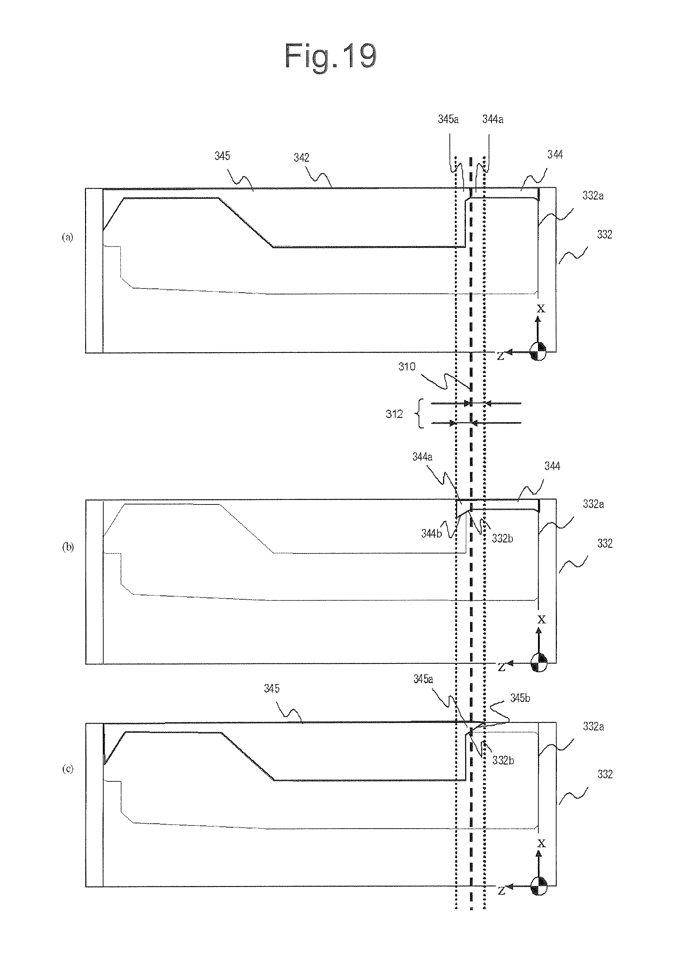

Next, detailed processing by the machining cross sectional shape generator 214 in S408 in Fig. 12 will be described by referring to Figs. 12, 18, and 19. Fig. 18 is a flow chart showing processing performed by the machining cross sectional shape generator 214 in S408 in Fig. 12. Fig. 19 is a diagram for describing a process to generate the first process turning outer surface machining cross sectional shape sheet model 344 and the second process turning outer surface machining cross sectional shape sheet model 345 from the turning outer surface machining cross sectional shape sheet model 342.

First, as shown in Fig. 19 (a), the machining cross sectional shape generator 214 divides the turning outer surface machining cross sectional shape sheet model 342 generated in S407 in Fig. 12 at the outer surface process dividing position 310 stored in the process dividing position memory 213 (Step S601).

Next, the machining cross sectional shape generator 214 calculates positions of two-shape sheet models divided in S601 and sets a sheet model, having a shape located at a smaller value in the Z axis direction compared to that of the outer surface process dividing position 310, as the first process turning outer surface machining cross sectional shape sheet model 344. The machining cross sectional shape generator 214 also sets a sheet model, having a shape located at a larger value in the Z axis direction compared to that of the outer surface process dividing position 310, as the second process turning outer surface machining cross sectional shape sheet model 345 (Step S602).

After that, as shown in Fig. 19 (b), the machining cross sectional shape generator 214 extends an end portion 344a located at the outer surface process dividing position 310 of the first process turning outer surface machining cross sectional shape sheet model 344 by the outer surface process division overlapping amount 312 in the Z axis direction (Step S603). At that time, the machining cross sectional shape generator 214 linearly extends a side 344b located at an inner surface of the end portion 344a in a direction along a side 332b which intersects with the outer surface process dividing position 310 of an aperture portion 332a of the turning cross sectional shape sheet model 332.

And then, as shown in Fig. 19 (c), the machining cross sectional shape generator 214 extends an end portion 345a located at the outer surface process dividing position 310 of the second process turning outer surface machining cross sectional shape sheet model 345 by the outer surface process division overlapping amount 312 on the Z axis negative side (Step S604). At that time, the machining cross sectional shape generator 214 linearly extends a side 345b located at an inner surface of the end portion 345a in a direction along a side 332b of the turning cross sectional shape sheet model 322. After that, the machining cross sectional shape generator 214 terminates S408 processing in Fig. 12.

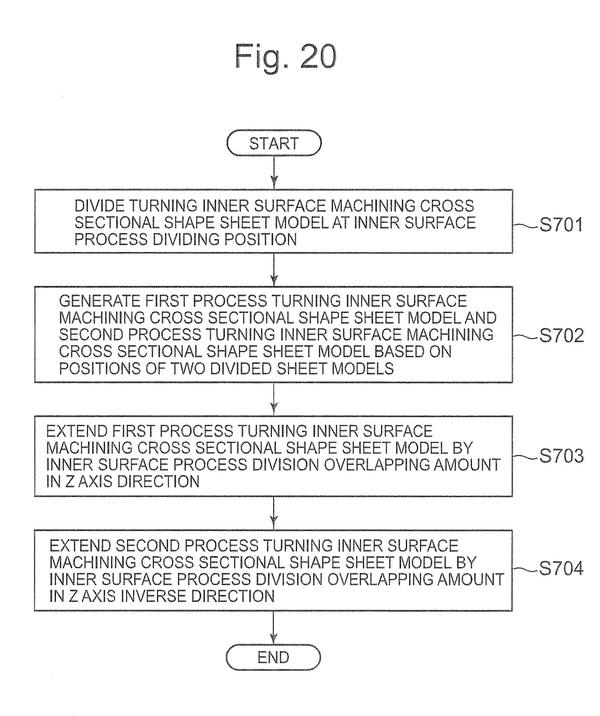

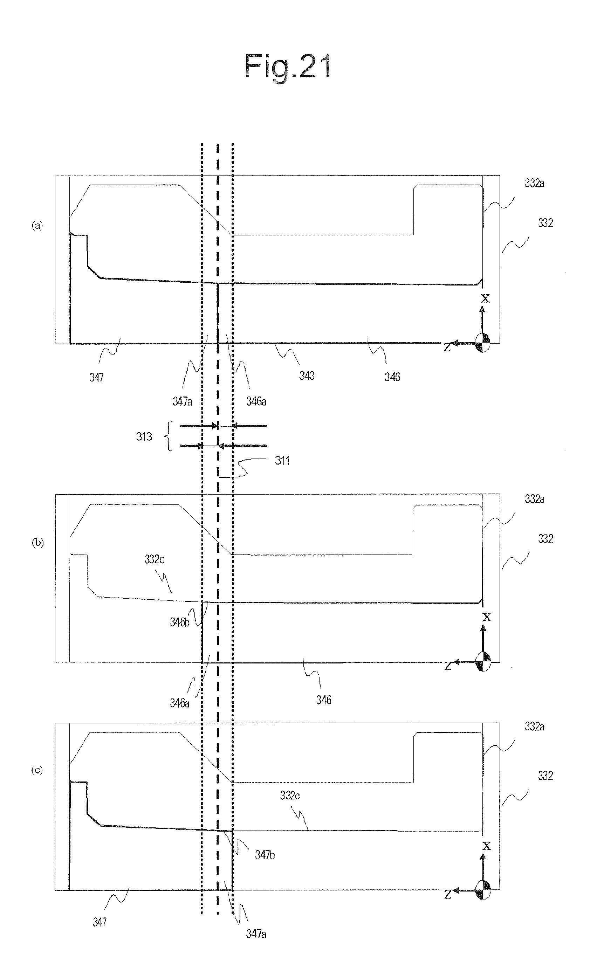

Next, detailed processing by the machining cross sectional shape generator 214 in S409 in Fig. 12 will be described by referring to Figs. 12, 20, and 21. Fig. 20 is a flow chart showing processing performed by the machining cross sectional shape generator 214 in S409 in Fig. 12. Fig. 21 is a diagram for describing a process to generate the first process turning inner surface machining cross sectional shape sheet model 346 and the second process turning inner surface machining cross sectional shape sheet model 347 from the turning inner surface machining cross sectional shape sheet model 347 from the turning inner surface machining cross sectional shape sheet model 343.

First, as shown in Fig. 21 (a), the machining cross sectional shape generator 214 divides the turning inner surface machining cross sectional shape sheet model 343 generated in S407 in Fig. 12 at the inner surface process dividing position 311 stored in the process dividing position memory 213 (Step S701).

Next, the machining cross sectional shape generator 214 calculates positions of two-shape sheet models divided in S701 and sets a sheet model, having a shape located at a smaller value in the Z axis direction compared to that of the inner surface process dividing position 311, as the first process turning inner surface machining cross sectional shape sheet model 346. The machining cross sectional shape generator 214 also sets a sheet model, having a shape located at a larger value in the Z axis direction compared to that of the inner surface process dividing position 311, as the second process turning inner surface machining cross sectional shape sheet model 347 (Step S702).

After that, as shown in Fig. 21 (b), the machining cross sectional shape generator 214 extends an end portion 346a located at the inner surface process dividing position 311 of the first process turning inner surface machining cross sectional shape sheet model 346 by the inner surface process division overlapping amount 313 in the Z axis direction (Step S703). At that time, the machining cross sectional shape generator 214 linearly extends a side 346b located at an outer surface of the end portion 346a in a direction along a side 332c which intersects with inner surface process dividing position 311 of the aperture portion 332a of the turning cross sectional shape sheet model 332.

And then, as shown in Fig. 21 (c), the machining cross sectional shape generator 214 extends an end portion 347a located at the inner surface process dividing position 311 of the second process turning inner surface machining cross sectional shape sheet model 347 by the inner surface process division overlapping amount 313 on the Z axis negative side (Step S704). At that time, the machining cross sectional shape generator 214 linearly extends a side 347b located at an outer surface of the end portion 347a in a direction along the side 332c of the turning cross sectional shape sheet model 332. After that, the machining cross sectional shape generator 214 terminates S409 processing in Fig. 12.

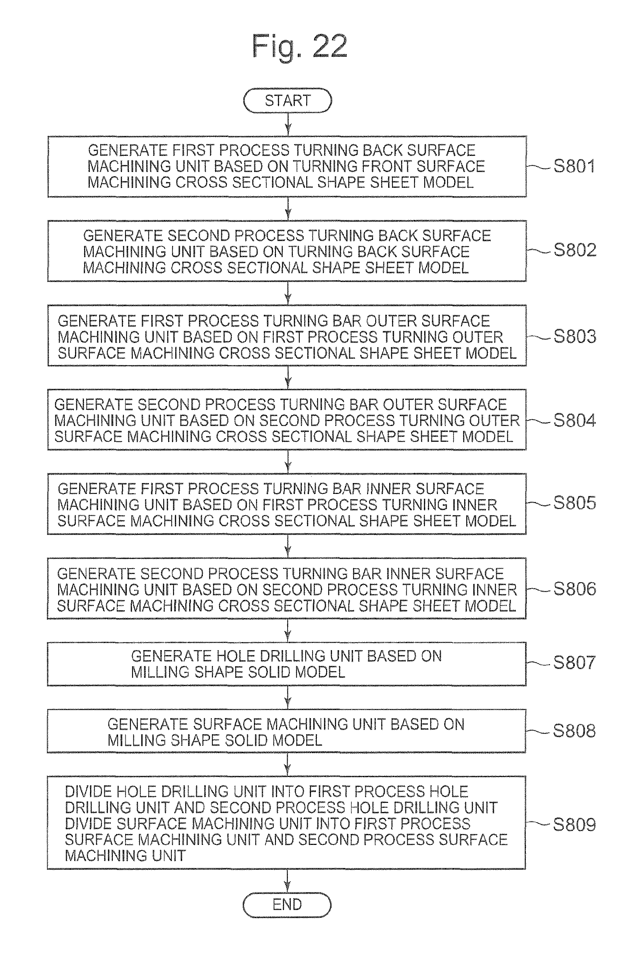

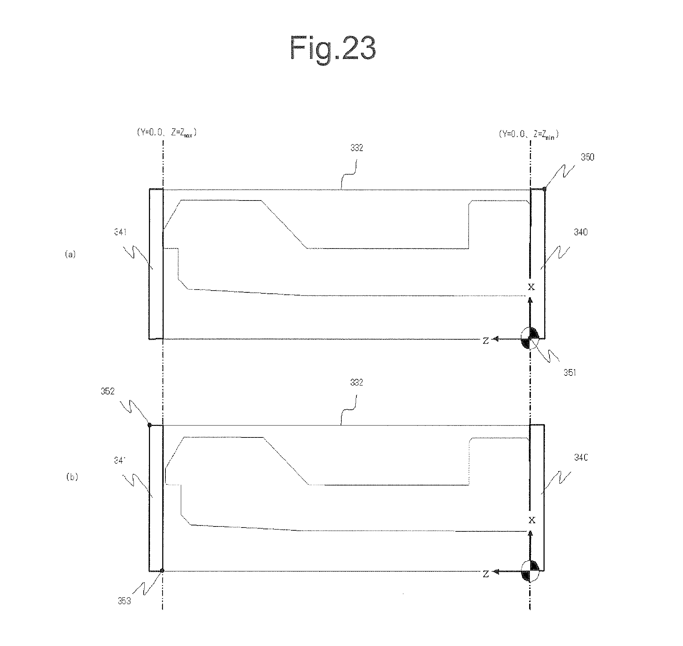

Next, processing in the machining unit generator 216 according to Embodiment 1 will be described by referring to Figs. 22 through 24. Fig. 22 is a flow chart showing processing of the machining unit generator 216 according to Embodiment 1, and corresponds to S106 in Fig. 6. Fig. 23 is a diagram for describing a process to generate a first process turning front surface machining unit 352 and a second process turning back surface machining unit 354. First, the machining unit generator 216 classifies the turning front surface machining cross sectional shape sheet model 340 stored in the machining cross sectional shape memory 215 as first process turning front surface machining. Next, as shown in Fig. 23 (a), the machining unit generator 216 determines, as a machining starting point 350, a point which is located at a maximum value in the X axis direction and also at a minimum value in the Z axis direction of the turning front surface machining cross sectional shape sheet model 340, and determines, as a machining ending point 351, a point which is located at a minimum value in the X axis direction and also at a maximum value in the Z axis direction of the turning front surface machining cross sectional shape sheet model 340. After that, the machining unit generator 216 generates the first process turning front surface machining unit 352 having shape sequence data which consists of the machining starting point 350 and the machining ending point 351 (Step S801). Here, a turning end face machining means machining of an end face portion of a material shape workpiece by the turning. And the first process turning front surface machining unit 352 is a machining unit in a first process for machining, by the turning, an end face portion of the material shape workpiece located at a position whose Z axis value is no more than $Z_{min}$. And then, the machining unit generator 216 stores the first process turning front surface machining unit 352 in the machining unit memory 217.

Next, the machining unit generator 216 classifies the turning back surface machining cross sectional shape sheet model 341 stored in the machining cross sectional shape memory 215 as second process turning back surface machining. Next, as shown in Fig. 23 (b), the machining unit generator 216 determines, as a machining starting point 352, a point which is located at a maximum value in the X axis direction and also at a maximum value in the Z axis direction of the turning back surface machining cross sectional shape sheet model 341, and determines, as a machining ending point 353, a point which is located at a minimum value in the X axis direction and also at a minimum value in the Z axis direction of the turning back surface machining cross sectional shape sheet model 341. After that, the machining unit generator 216 generates the second process turning back surface machining unit 354 having shape sequence data which consists of the machining starting point 352 and the machining ending point 353 (Step S802). Here, the second process turning back surface machining unit 354 is a machining unit in a second process for machining, by the turning, an end face portion of the material shape workpiece located at a position whose Z axis value is no less than $Z_{max}$. And then, the machining unit generator 216 stores the second process turning back surface machining unit 354 in the machining unit memory 217.

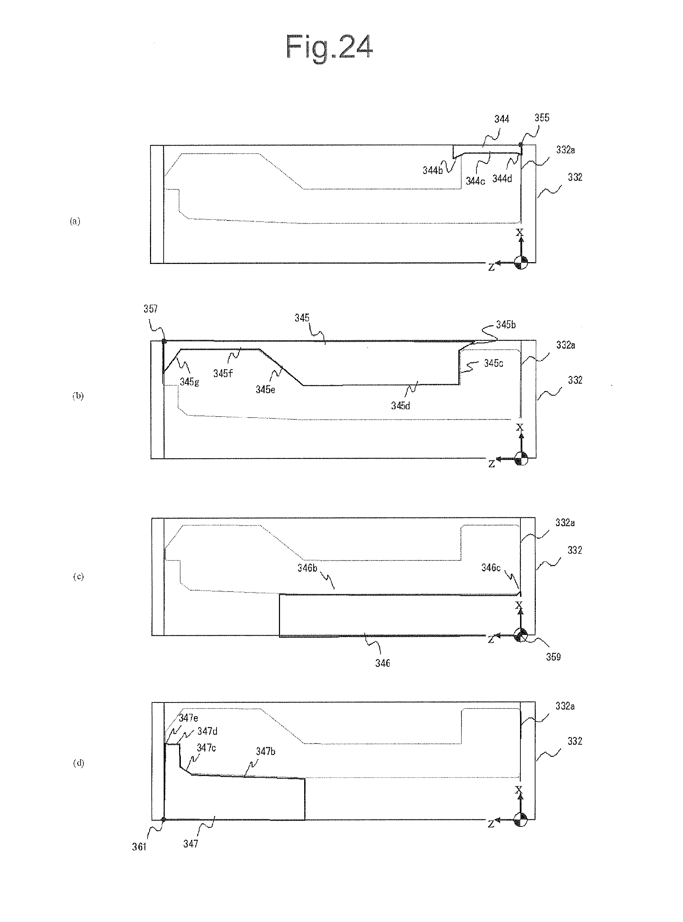

Fig. 24 is a diagram for describing a process to generate a first process turning bar outer surface machining unit 356, a second process turning bar outer surface machining unit 358, a first process turning bar inner surface machining unit 360, and a second process turning bar inner surface machining unit 362. Next, the machining unit generator 216 classifies the first process turning outer surface machining cross sectional shape sheet model 344 stored in the machining cross sectional shape memory 215 as first process turning bar outer surface machining. Next, as shown in Fig. 24 (a), the machining unit generator 216 determines, as a machining starting point 355, a point which is located at a maximum value in the X axis direction and also at a minimum value in the Z axis direction of the first process turning outer surface machining cross sectional shape sheet model 344. After that, the machining unit generator 216 determines sides 344b, 344c, and 344d of the first process turning outer surface machining cross sectional shape sheet model 344 which touch an aperture portion 332a of the turning cross sectional shape sheet model 332. After that, the machining unit generator 216 generates the first process turning bar outer surface machining unit 356 having machining data which consists of the machining starting point 355 and shape sequence data which consists of the sides 344b through 344d (Step S803). Here, turning bar machining means machining of a side portion of a material shape workpiece by the turning. And the first process turning bar outer surface machining unit 356 is a machining unit in a first process for machining, by the turning, a side portion of outer surface of the material shape workpiece. And then, the machining unit generator 216 stores the first process turning bar outer surface machining unit 356 in the machining unit memory 217.

Next, the machining unit generator 216 classifies the second process turning outer surface machining cross sectional shape sheet model 345 stored in the machining cross sectional shape memory 215 as second process turning bar outer surface machining. Next, as shown in Fig. 24 (b), the machining unit generator 216 determines, as a machining starting point 357, a point which is located at a maximum value in the X axis direction and also at a maximum value in the Z axis direction of the second process turning outer surface machining cross sectional shape sheet model 345. After that, the machining unit generator 216 determines sides 345b, 345c, 345d, 345e, 345f, and 345g of the second process turning outer surface machining cross sectional shape sheet model 345 which touch the aperture portion 332a of the turning cross sectional shape sheet model 332. After that, the machining unit generator 216 generates the second process turning bar outer surface machining unit 358 having machining data which consists of the machining starting point 357 and shape sequence data which consists of the sides 345b through 345g (Step S804). Here, the second process turning bar outer surface machining unit 358 is a machining unit in a second process for machining, by the turning, a side portion of outer surface of the material shape workpiece. And then, the machining unit generator 216 stores the second process turning bar outer surface machining unit 358 in the machining unit memory 217.

Next, the machining unit generator 216 classifies the first process turning inner surface machining cross sectional shape sheet model 346 stored in the machining cross sectional shape memory 215 as first process turning bar inner surface machining. Next, as shown in Fig. 24 (c), the machining unit generator 216 determines, as a machining starting point 359, a point which is located at a minimum value in the X axis direction and also at a minimum value in the Z axis direction of the first process turning inner surface machining cross sectional shape sheet model 346. After that, the machining unit generator 216 determines sides 346b and 346c of the first process turning inner surface machining cross sectional shape sheet model 346 which touch the aperture portion 332a of the turning cross sectional shape sheet model 332. After that, the machining unit generator 216 generates the first process turning bar inner surface machining unit 360 having machining data which consists of the machining starting point 359 and shape sequence data which consists of the sides 346b and 346c (Step S805). Here, the first process turning bar inner surface machining unit 360 is a machining unit in a first process for machining, by the turning, a side portion of inner surface of the material shape workpiece. And then, the machining unit generator 216 stores the first process turning bar inner surface machining unit 360 in the machining unit memory 217.

Next, the machining unit generator 216 classifies the second process turning inner surface machining cross sectional shape sheet model 347 stored in the machining cross sectional shape memory 215 as second process turning bar inner surface machining. Next, as shown in Fig. 24 (d), the machining unit generator 216 determines, as a machining starting point 361, a point which is located at a minimum value in the X axis direction and also at a maximum value in the Z axis direction of the second process turning inner surface machining cross sectional shape sheet model 347. After that, the machining unit generator 216 determines sides 347b, 347c, 347d, and 347e of the second process turning inner surface machining cross sectional shape sheet model 347 which touch the aperture portion 332a of the turning cross sectional shape sheet model 332. After that, the machining unit generator 216 generates the second process turning bar inner surface machining unit 362 having machining data which consists of the machining starting point 361 and shape sequence data which consists of the sides 347b through 347e (Step S806). Here, the second process turning bar inner surface machining unit 362 is a machining unit in a second process for machining, by the turning, a side portion of inner surface of the material shape workpiece. And then, the machining unit generator 216 stores the second process turning bar inner surface machining unit 362 in the machining unit memory 217.

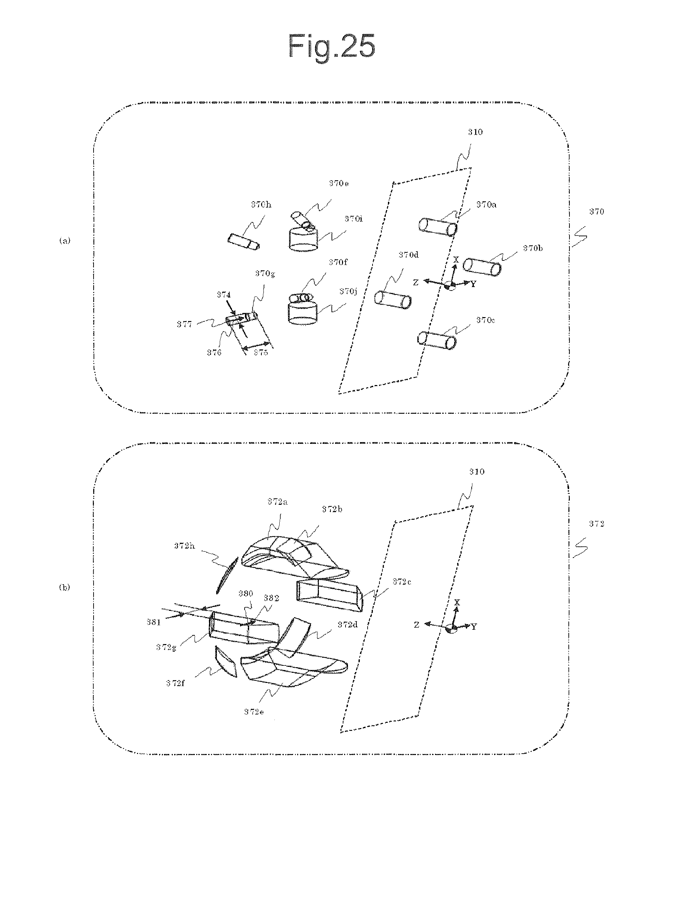

Fig. 25 is a diagram for describing first process hole drilling units 378a through 378d, second process hole drilling units 378e through 378j, and second process surface machining units 383a through 383h. Next, as shown in Fig. 25 (a), the machining unit generator 216 extracts a cylinder shape solid model and a conical shape solid model from the milling shape solid model 351 stored in the machining cross sectional shape memory 215. After that, the machining unit generator 216 groups, among the extracted cylinder shape solid models and conical shape solid models, solid models which are adjacent with each other and are able to perform hole drilling continuously. For example, a solid model 370g shown in Fig. 25 (a) is a grouped one consisting of a cylinder shape solid model and a conical shape solid model which are adjacent with each other. Each of the solid models 370a through 370j which have been grouped, shown in Fig. 25 (a), corresponds to a hole drilling shape solid model 370. Here, a hole drilling shape is a shape of workpiece to be removed by a hole drilling which is a kind of the milling. And then, the machining unit generator 216 determines, with respect to each of the hole drilling shape solid models 370, a diameter of the cylinder shape as a hole diameter 374, an axial direction size of the cylinder shape or the conical shape as a hole depth 375, and an axial direction vector of the cylinder shape or the conical shape as a hole drilling tool direction 376. Next, the machining unit generator 216 determines, with respect to each of the hole drilling shape solid models 370, a point which is located on an axis and also located at an end portion in an opposite direction to the hole drilling tool direction 376 as a hole drilling starting point 377. After that, the machining unit generator 216 generates a hole drilling unit 378 having machining data which consists of the hole diameter 374, the hole depth 375, and the hole drilling tool direction 376, and shape sequence data which consists of the hole drilling starting point 377 (Step S807).

Furthermore, in S807, a machining time can be shortened and also machining accuracy can be improved by grouping solid models in which continuous hole drilling can be performed.

Meanwhile, as shown in Fig. 25 (b), each of the solid models 372a through 372h which configures a difference between the milling shape solid model 351 and the hole drilling shape solid model 370 corresponds to a surface machining shape solid model 372. Here, a surface machining shape is a shape of workpiece to be removed by a surface machining which is a kind of the milling. Next, the machining unit generator 216 determines, with respect to each of the surface machining shape solid models 372, a normal vector of a plane touching the product shape solid model 300 as a surface machining tool direction 380 and a dimension of the surface machining tool direction 380 as a surface machining depth 381. After that, the machining unit generator 216 determines, with respect to each of the surface machining shape solid models 372, a plane which is located at an end portion in an opposite direction to the surface machining tool direction 380 as a surface machining base plane 382. And then, the machining unit generator 216 generates a surface machining unit 383 having machining data which consists of the surface machining tool direction 380 and the surface machining depth 381, and shape sequence data which consists of the surface machining base plane 382 (Step S808).

Next, the machining unit generator 216 divides, based on shape sequence data of the hole drilling unit 378, the hole drilling unit 378 into the first process hole drilling units 378a through 378d and the second process hole drilling units 378e through 378j. Here, the first process hole drilling units 378a through 378d are, among the hole drilling unit 378, units whose shape sequence data are located at smaller values in the Z axis direction compared to the outer surface process dividing position 310, and each of the units corresponds to each of the hole drilling shape solid models 370a through 370d shown in Fig. 25 (a), respectively. The second process hole drilling units 378e through 378j are, among the hole drilling units 378, units whose shape sequence data are located at larger values in the Z axis direction compared to the outer surface process dividing position 310, and each of the units corresponds to each of the hole drilling shape solid models 370e through 370j shown in Fig. 25 (a), respectively. The machining unit generator 216 also divides, based on shape sequence data of the surface machining unit 383, the surface machining unit 383 into a first process surface machining unit and second process surface machining units 383a through 383h. Here, the first process surface machining unit is, among the surface machining unit 383, a unit whose shape sequence data is located at a smaller value in the Z axis direction compared to the outer surface process dividing position 310, and is not generated since corresponding surface machining shape solid model 372 does not exist as shown in Fig. 25 (b). The second process surface machining units 383a through 383h are, among the surface machining unit 383, units whose shape sequence data are located at larger values in the Z axis direction compared to the outer surface process dividing position 310, and each of the units corresponds to each of the surface machining shape solid models 372a through 372h, shown in Fig. 25 (b), respectively (Step S809). And then, the machining unit generator 216 stores the first process hole drilling units 378a through 378d, the second process hole drilling units 378e through 378j, and the second process surface machining units 383a through 383h in the machining unit memory 217. After that, the machining unit generator 216 terminates its processing.

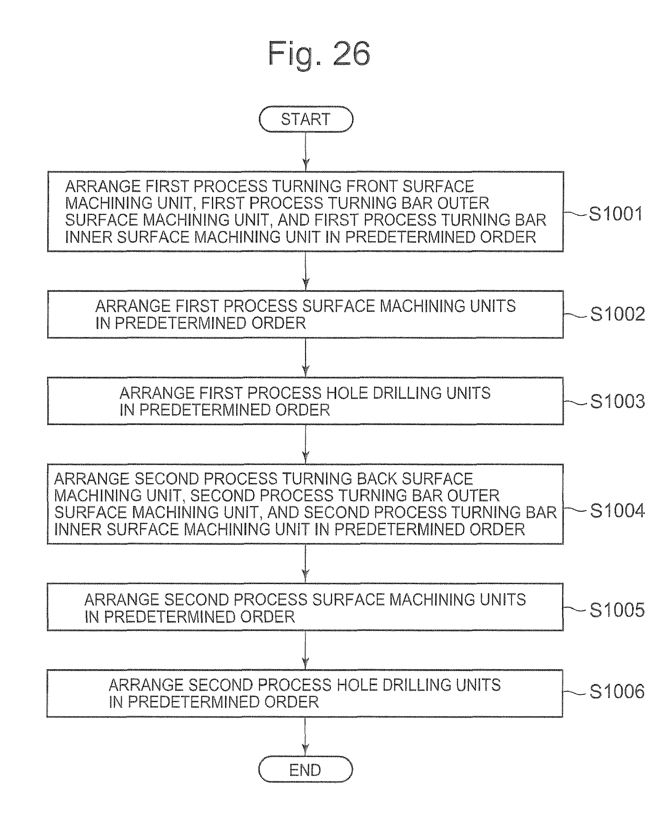

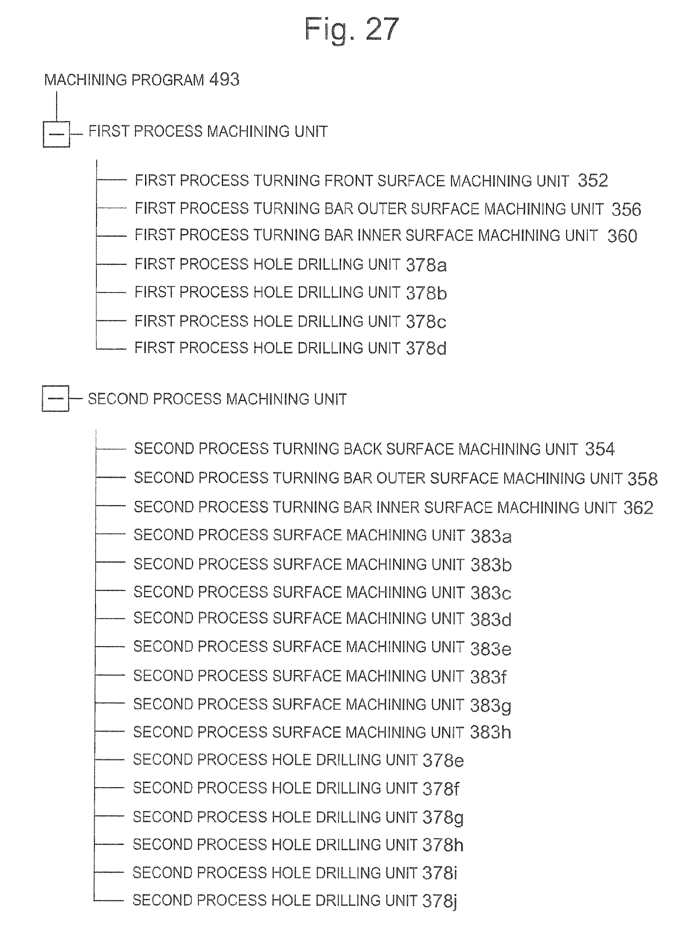

Next, processing in the machining program generator 218 according to Embodiment 1 will be described by referring to Figs. 26 and 27. Fig. 26 is a flow chart showing processing of the machining program generator 218 according to Embodiment 1, and corresponds to S107 in Fig. 6. Fig. 27 is a machining unit tree diagram showing hierarchically a plurality of machining units, in the order of the machining, which configure a machining program 390 generated by the machining program generator 218 according to Embodiment 1.

First, the machining program generator 218 stores the first process turning front surface machining unit 352, the first process turning bar outer surface machining unit 356, and the first process turning bar inner surface machining unit 360, stored in the machining unit memory 217, in the machining program memory 230 in the order of the machining, i.e. first the first process turning front surface machining unit 352, second the first process turning bar outer surface machining unit 356, and third the first process turning bar inner surface machining unit 360 (Step S1001).

Next, the machining program generator 218 stores first process surface machining units in the machining program memory 230 in ascending order of minimum values in the Z axis direction of the surface machining base plane 382 of shape sequence data (Step S1002). Here, when two or more of the first process surface machining units have the same minimum value in the Z axis direction of the surface machining base plane 382, the machining program generator 218 stores the first process surface machining units in the machining program memory 230 in clockwise order when viewed from the Z axis negative side assuming that the Z axis which is a turning axis is employed as a rotating axis. Furthermore, since the first process surface machining units are not generated in the present embodiment, the machining program generator 218 skips S1002.

After that, the machining program generator 218 stores the first process hole drilling units 378a through 378d in the machining program memory 230 in ascending order of the hole diameters 374 in machining data (Step S1003). Here, when two or more of the first process hole drilling units 378a through 378d have the same hole diameter 374, the machining program generator 218 stores the first process hole drilling units 378a through 378d in the machining program memory 230 in clockwise order when viewed from the Z axis negative side assuming that the Z axis which is a turning axis is employed as a center. Concretely, the machining program generator 218 stores the first process hole drilling units 378a through 378d in the machining program memory 230 in the order of first the first process hole drilling unit 378a, second the first process hole drilling unit 378b, third the first process hole drilling unit 378c, and fourth the first process hole drilling unit 378d.

And then, the machining program generator 218 stores the second process turning back surface machining unit 354, the second process turning bar outer surface machining unit 358, and the second process turning bar inner surface machining unit 362, stored in the machining unit memory 217, in the machining program memory 230 in the order of the machining, i.e. first the second process turning back surface machining unit 354, second the second process turning bar outer surface machining unit 358, and third the second process turning bar inner surface machining unit 362 (Step S1004).

Next, the machining program generator 218 stores second process surface machining units 383a through 383h in the machining program memory 230 in descending order of maximum values in the Z axis direction of the surface machining base plane 382 of shape sequence data (Step S1005). Here, when two or more of the second process surface machining units 383a through 383h have the same maximum value in the Z axis direction of the surface machining base plane 382, the machining program generator 218 stores the second process surface machining units 383a through 383h in the machining program memory 230 in counterclockwise order when viewed from the Z axis positive side assuming that the Z axis which is a turning axis is employed as a rotating axis. Concretely, the machining program generator 218 stores the second process surface machining units 383a through 383h in the machining program memory 230 in the order of first the second process surface machining units 383a, second the second process surface machining units 383b, third the second process surface machining units 383c, fourth the second process surface machining units 383d, fifth the second process surface machining units 383e, sixth the second process surface machining units 383f, seventh the second process surface machining units 383g, and eighth the second process surface machining units 383h.

And then, the machining program generator 218 stores the second process hole drilling units 378e through 378j in the machining program memory 230 in ascending order of the hole diameters 374 in machining data (Step S1006). Here, when two or more of the second process hole drilling units 378e through 378j have the same hole diameter 374, the machining program generator 218 stores the second process hole drilling units 378e through 378j in the machining program memory 230 in counterclockwise order when viewed from the Z axis positive side assuming that the Z axis which is a turning axis is employed as a center. Concretely, the machining program generator 218 stores the second process hole drilling units 378e through 378j in the machining program memory 230 in the order of first the second process hole drilling units 378e, second the second process hole drilling units 378f, third the second process hole drilling units 378g, fourth the second process hole drilling units 378h, fifth the second process hole drilling units 378i, and sixth the second process hole drilling units 378j. After that, the machining program generator 218 terminates its processing.

As mentioned above, in the machining program generator 218, since the machining program 390 is generated by arranging the machining units in the above described predetermined order, travel lengths of the tools in the machine tool can be shortened and also the operator can easily understand machining operation of the machine tool. Note that the order of the machining units in the machining program 390 is not necessarily the above described one.

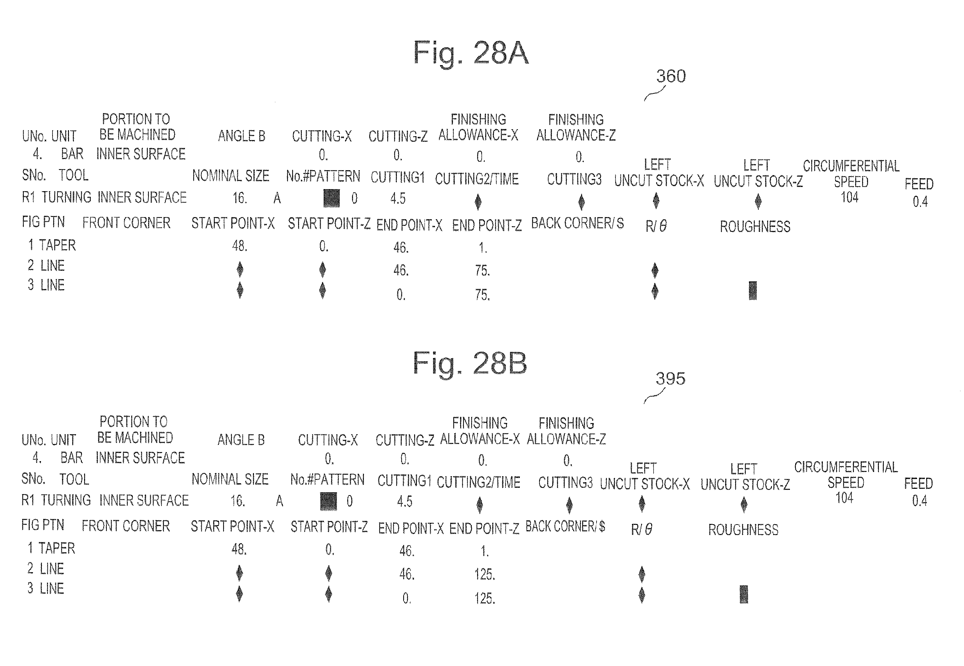

Next, processing in the machining unit editor 219 according to Embodiment 1 will be described by referring to Fig. 28. Fig. 28 is a diagram for describing processing of the machining unit editor 219 according to Embodiment 1, and the processing corresponds to S108 in Fig. 6.

First, the machining unit editor 219 displays, on the display section 201, the machining units which configure the machining program 390 stored in the machining program memory 230. Next, the machining unit editor 219 edits the machining units based on operation of the operator through the data input section 203. Here, the operator can modify the machining units which configure the machining program 390 or can add a new machining unit at an arbitrary position in the machining program 390. Fig. 28 (a) is a diagram showing data contents of the first process turning bar inner surface machining unit 360 before editing. Fig. 28 (b) is a diagram showing data contents of a first process turning bar inner surface machining unit 395 after editing. In Fig. 28 (b), among shape sequence data shown as "FIG" at a lower part, data in a "end point-Z" column, and "2 line" and "3 line" data are modified from "75" to "125". And then, the machining unit editor 219 stores the edited machining units in the edited machining unit memory 220. After that, the machining unit editor 219 terminates its processing.

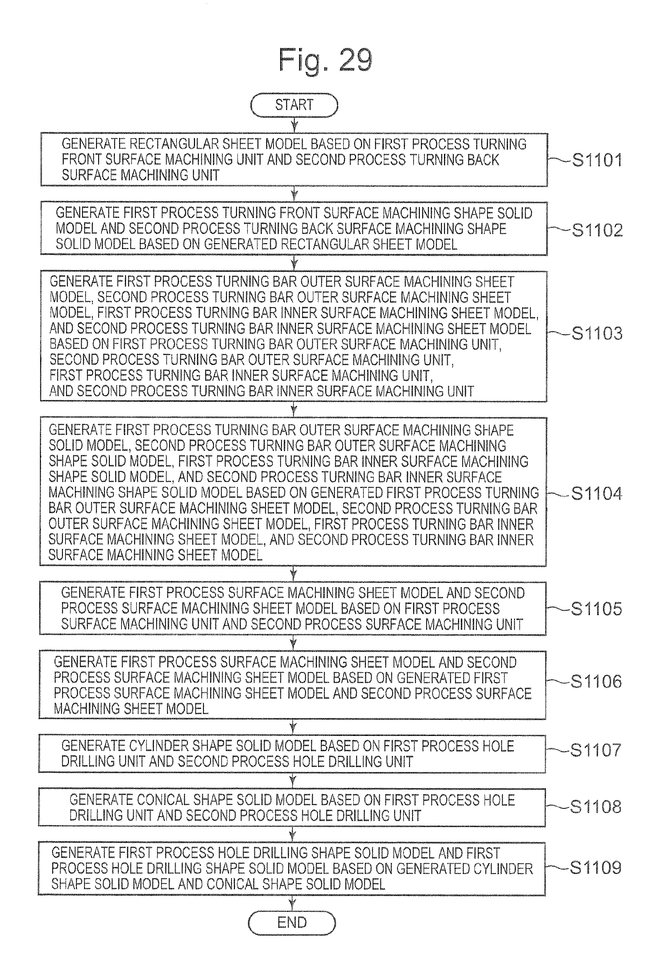

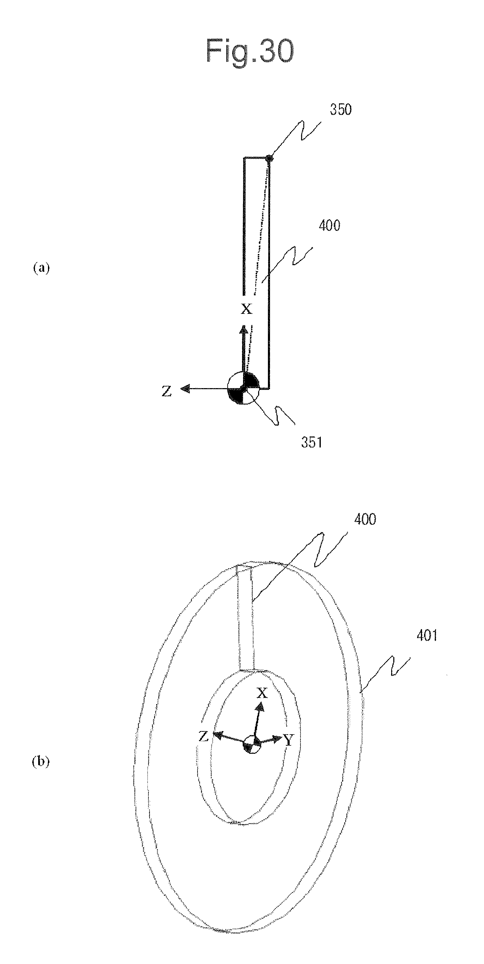

Next, processing in the machining shape generator 221 according to Embodiment 1 will be described by referring to Figs. 29 through 34. Fig. 29 is a flow chart showing processing of the machining shape generator 221 according to Embodiment 1, and corresponds to S109 in Fig. 6. Fig. 30 is a diagram for describing a process in which the machining shape generator 221 according to Embodiment 1 generates a first process turning front surface machining shape solid model 401 and a second process turning back surface machining shape solid model 402. First, the machining shape generator 221 acquires, based on the first process turning front surface machining unit 352 stored in the machining unit memory 217 or in the edited machining unit memory 220, the machining starting point 350 and the machining ending point 351 of the shape sequence data. Here, when the first process turning front surface machining unit 352 is stored in the machining unit memory 217 and in the edited machining unit memory 220, the machining shape generator 221 uses the first process turning front surface machining unit 352 stored in the edited machining unit memory 220. Next, as shown in Fig. 30 (a), the machining shape generator 221 generates a rectangular sheet model 400 configured with a diagonal which connects the machining starting point 350 and the machining ending point 351 (Step S1101).

After that, as shown in Fig. 30 (b), the machining shape generator 221 generates the first process turning front surface machining shape solid model 401 by rotating the rectangular sheet model 400 by 360 degrees about the Z axis which is a turning axis (Step S1102). And then, the machining shape generator 221 stores the first process turning front surface machining shape solid model 401 in the machining shape memory 222.

Similar to S1101 and S1102, the machining shape generator 221 also generates a second process turning back surface machining shape solid model 403 (not shown) based on the second process turning back surface machining unit 354 stored in the machining unit memory 217 or in the edited machining unit memory 220. Next, the machining shape generator 221 stores the second process turning back surface machining shape solid model 403 in the machining shape memory 222.

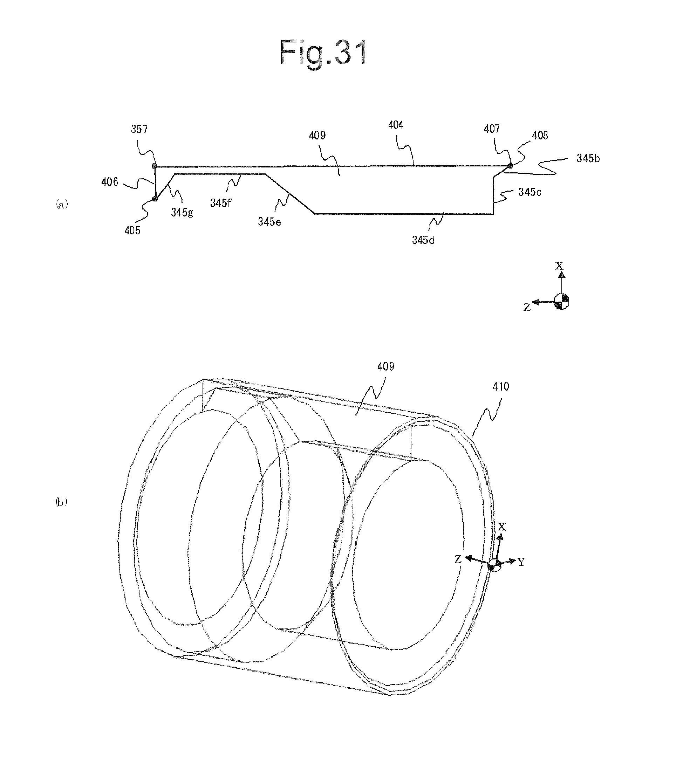

Fig. 31 is a diagram for describing a process in which the machining shape generator 221 according to Embodiment 1 generates a first process turning bar outer surface machining shape solid model 420 and a second process turning bar outer surface machining shape solid model 410. Next, the machining shape generator 221 acquires, based on the second process turning bar outer surface machining unit 358 stored in the machining unit memory 217 or in the edited machining unit memory 220, the machining starting point 357 of the machining data and the sides 345b through 345g of the shape sequence data. Here, when the second process turning bar outer surface machining unit 358 is stored in the machining unit memory 217 and in the edited machining unit memory 220, the machining shape generator 221 uses the second process turning bar outer surface machining unit 358 stored in the edited machining unit memory 220. After that, the machining shape generator 221 draws a perpendicular 406 from a shape sequence data starting point 405 to a straight line 404 which passes through the machining starting point 357 and is parallel to the Z axis, and draw a perpendicular 408 from a shape sequence data ending point 407 to the line 404. Here, the shape sequence data starting point 405 is, among points on the sides 345b through 345g, a point located at a maximum value in the Z axis direction. The shape sequence data ending point 407 is, among the points on the sides 345b through 345g, a point located at a minimum value in the Z axis direction. And then, as shown in Fig. 31 (a), the machining shape generator 221 generates a second process turning bar outer surface machining sheet model 409 surrounded by the sides 345b through 345g, the straight line 404, the perpendicular 406, and the perpendicular 408 (Step S 1103).

Next, as shown in Fig. 31 (b), the machining shape generator 221 generates the second process turning bar outer surface machining shape solid model 410 by rotating the second process turning bar outer surface machining sheet model 409 by 360 degrees about the Z axis which is the turning axis (Step S1104). After that, the machining shape generator 221 stores the second process turning bar outer surface machining shape solid model 410 in the machining shape memory 222.

Similar to S1103 and S1104, the machining shape generator 221 also generates the first process turning bar outer surface machining shape solid model 420 (not shown) based on the first process turning bar outer surface machining unit 356 stored in the machining unit memory 217 or in the edited machining unit memory 220. Next, the machining shape generator 221 stores the first process turning bar outer surface machining shape solid model 420 in the machining shape memory 222.

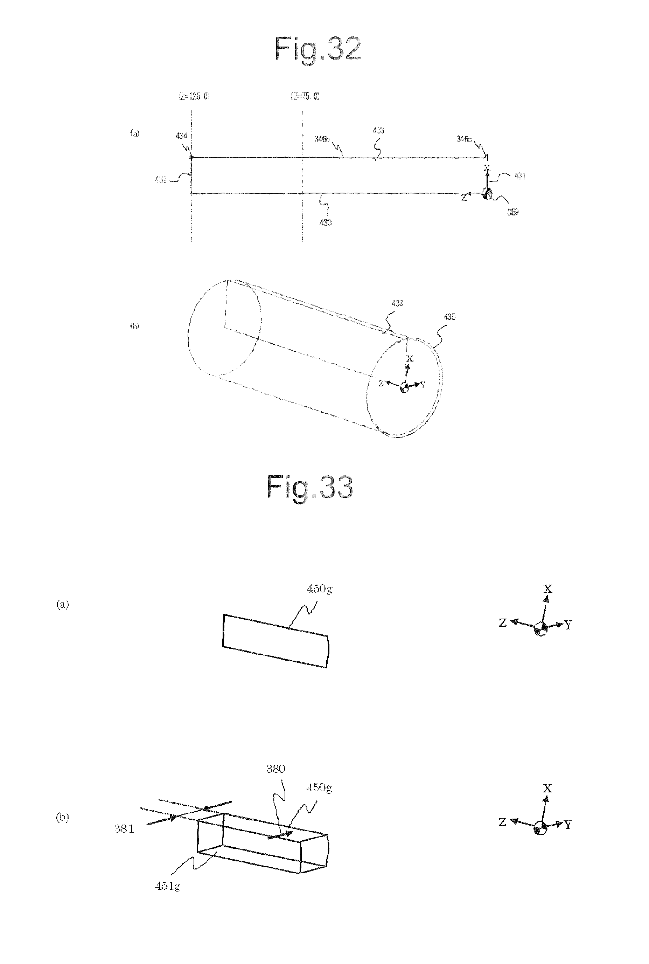

Fig. 32 is a diagram for describing a process in which the machining shape generator 221 according to Embodiment 1 generates a first process turning bar inner surface machining shape solid model 435 and a second process turning bar inner surface machining shape solid model 440. First, similar to S1103, the machining shape generator 221 generates, based on the first process turning bar inner surface machining unit 395 stored in the edited machining unit memory 220, a first process turning bar inner surface machining sheet model 433, as shown in Fig. 32 (a), surrounded by the sides 346b and 346c, a straight line 430, a perpendicular 431, and a perpendicular 432. As shown in Fig. 32 (a), in the first process turning bar inner surface machining sheet model 433, a Z coordinate of a shape sequence data ending point 434 is "125", not "75".

Next, similar to S1104, the machining shape generator 221 generates, as shown in Fig. 32 (b), the first process turning bar inner surface machining shape solid model 435 by rotating the first process turning bar inner surface machining sheet model 433 by 360 degrees about the Z axis which is the turning axis. After that, the machining shape generator 221 stores the first process turning bar inner surface machining shape solid model 435 in the machining shape memory 222.

Similar to S1103 and S1104, the machining shape generator 221 also generates the second process turning bar inner surface machining shape solid model 440 (not shown) based on the second process turning bar inner surface machining unit 362 stored in the machining unit memory 217 or in the edited machining unit memory 220. Next, the machining shape generator 221 stores the second process turning bar inner surface machining shape solid model 440 in the machining shape memory 222.

Fig. 33 is a diagram for describing a process in which the machining shape generator 221 according to Embodiment 1 generates second process surface machining shape solid models 451a through 451h. Next, the machining shape generator 221 acquires, based on a second process surface machining unit 383g stored in the machining unit memory 217 or in the edited machining unit memory 220, the surface machining tool direction 380 and the surface machining depth 381 of the machining data, and the surface machining base plane 382 of the shape sequence data. After that, as shown in Fig. 33 (a), the machining shape generator 221 generates a second process surface machining sheet model 450g which is the same with the surface machining base plane 382 (Step S1105).

Next, as shown in Fig. 33 (b), the machining shape generator 221 generates a second process surface machining shape solid model 451g by moving the second process surface machining sheet model 450g parallel to an inverse direction to the surface machining tool direction 380 by the surface machining depth 381 (Step S1106). And then, the machining shape generator 221 stores the second process surface machining sheet model 451g in the machining shape memory 222.

Similar to S1105 and S1106, the machining shape generator 221 also generates, based on the second process surface machining units 383a through 383f and 383h stored in the machining unit memory 217 or in the edited machining unit memory 220, the second process surface machining shape solid models 451a through 451f and 451h (not shown), respectively. Next, the machining shape generator 221 stores the second process surface machining shape solid models 451a through 451f and 451h in the machining shape memory 222. Furthermore, since the first process surface machining units are not generated in the present embodiment, the machining shape generator 221 does not generate the first process surface machining shape solid models.

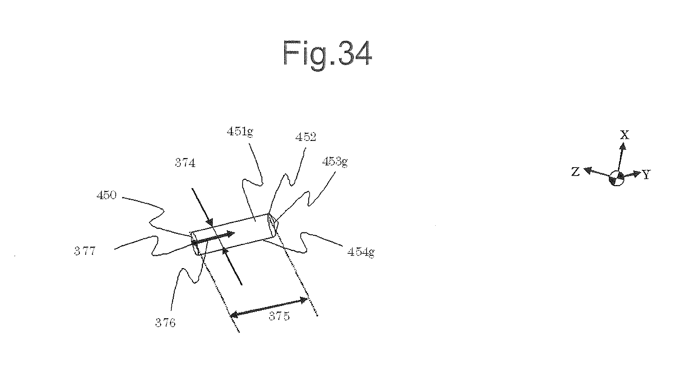

Fig. 34 is a diagram for describing a process in which the machining shape generator 221 according to Embodiment 1 generates first process hole drilling shape solid models 454a through 454d and second process hole drilling shape solid models 454e through 454j. Next, the machining shape generator 221 acquires, based on a second process hole drilling unit 378g stored in the machining unit memory 217 or in the edited machining unit memory 220, the hole diameter 374, hole depth 375, and hole drilling tool direction 376 of the machining data, and the hole drilling starting point 377 of the shape sequence data. After that, as shown in Fig. 34, the machining shape generator 221 generates a cylinder shape solid model 451g in which a center point of a circular shape base plane 450 is located at the hole drilling starting point 377, whose diameter is equal to the hole diameter 374, and which is extended from the base plane 450 to the hole drilling tool direction 376 by the hole depth 375 (Step S1107).

And then, as shown in Fig. 34, the machining shape generator 221 generates a conical shape solid model 453g in which a circular shape base plane 452 coincides with a top surface of the cylinder shape solid model 451g, and whose vertical angle is equal to 118 degrees (Step S1108). The vertical angle of the conical shape solid model 453g is equal to an edge angle of a tool to be used in the hole drilling in the machine tool 6.

Next, as shown in Fig. 34, the machining shape generator 221 generates a hole drilling shape solid model 454g by performing an addition in which the cylinder shape solid model 451g is added to the conical shape solid model 453g (Step S1109). After that, the machining shape generator 221 stores the hole drilling shape solid model 454g in the machining shape memory 222.

Similar to S1107 and S1109, the machining shape generator 221 also generates, based on the first process hole drilling units 378a through 378d and the second process hole drilling units 378e through 378j stored in the machining unit memory 217 or in the edited machining unit memory 220, the first process hole drilling shape solid models 454a through 454d and the second process hole drilling shape solid models 454e, 454f, and 454h through 454j (not shown). And then, the machining shape generator 221 stores the first process hole drilling shape solid models 454a through 454d and the second process hole drilling shape solid models 454e, 454f, and 454h through 454j in the machining shape memory 222. After that, the machining shape generator 221 terminates its processing.

Furthermore, in the solid models generated by the machining shape generator 221, there may be a case in which machining areas are uselessly duplicated with each other in addition to the outer surface process division overlapping amount 312 and the inner surface process division overlapping amount 313 caused by the machining unit edited in S108 in Fig. 6. Concretely, caused by the first process turning bar inner surface machining unit 395 edited in S108 in Fig. 6, the machining shape generator 221 generates the first process turning bar inner surface machining shape solid model 435 longer in the Z axis positive direction as shown in Fig. 32. This brings a useless duplication of the first process turning bar inner surface machining shape solid model 435 with the second process turning bar inner surface machining shape solid model 440 and the second process turning back surface machining shape solid model 402. Therefore, uselessly duplicated machining areas are removed by the processing in the material shape regenerator 223, the machining cross sectional shape regenerator 225, the machining unit regenerator 227, and the machining program regenerator 229.

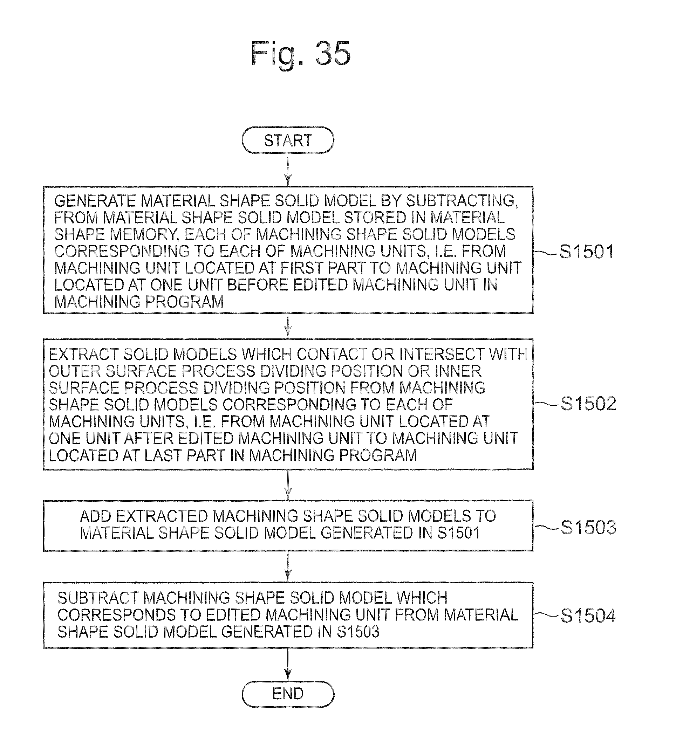

Next, processing in the material shape regenerator 223 according to Embodiment 1 will be described by referring to Figs. 35 and 36. Fig. 35 is a flow chart showing processing of the material shape regenerator 223 according to Embodiment 1, and corresponds to S110 in Fig. 6. Fig. 36 is a diagram showing a material shape solid model 462 generated by the material shape regenerator 223 according to Embodiment 1. First, the material shape regenerator 223 acquires, from the machining shape memory 222, each of the solid models corresponding to each of the machining units, i.e. from a machining unit located at the first part through a machining unit located at one unit before a machining unit edited in S108 in Fig. 6 in the machining program 390 stored in the machining program memory 230. Concretely, since the first process turning bar inner surface machining unit 395 is edited in S108 in Fig. 6, the material shape regenerator 223 acquires, from the machining shape memory 222, the first process turning front surface machining shape solid model 401 and the first process turning bar outer surface machining shape solid model 420 which correspond to the first process turning front surface machining unit 352 and the first process turning bar outer surface machining unit 356, respectively. After that, the material shape regenerator 223 generates a material shape solid model 460 by performing a subtraction in which the first process turning front surface machining shape solid model 401 and the first process turning bar outer surface machining shape solid model 420 are subtracted from the material shape solid model 301 stored in the material shape memory 211 (Step S1501). And then, the material shape regenerator 223 stores the material shape solid model 460 in the material shape memory 224.

Next, the material shape regenerator 223 acquires, from the machining shape memory 222, each of the solid models corresponding to each of the machining units, i.e. from a machining unit located at one unit after the machining unit edited in S108 in Fig. 6 through a machining unit located at the last part in the machining program 390 stored in the machining program memory 230. Concretely, the material shape regenerator 223 acquires, from the machining shape memory 222, the first process hole drilling shape solid model 454a through the second process hole drilling shape solid model 454j which correspond to the first process hole drilling unit 378a through the second process hole drilling unit 378j, respectively. After that, from solid models, i.e. from the first process hole drilling shape solid model 454a through the second process hole drilling shape solid model 454j, the material shape regenerator 223 extracts solid models which contact or intersect with the outer surface process dividing position 310 or the inner surface process dividing position 311 stored in the process dividing position memory 213 (Step S1502). Here, the material shape regenerator 223 extracts solid models which contacts or intersects with the outer surface process dividing position 310 from the machining shape solid models which are located at an outer surface side compared to the product shape solid model 300, and also extracts solid models which contacts or intersects with the inner surface process dividing position 311 from the machining shape solid models which are located at an inner surface side compared to the product shape solid model 300.

Next, the material shape regenerator 223 generates a material shape solid model 461 by performing an addition in which the machining shape solid models extracted in S1502 are added to the material shape solid model 460 stored in the material shape memory 224 (Step S1503). And then, the material shape regenerator 223 stores the material shape solid model 461 in the material shape memory 224.

Next, the material shape regenerator 223 acquires, from the machining shape memory 222, the first process turning bar inner surface machining shape solid model 435 which corresponds to the first process turning bar inner surface machining unit 395 edited in S108 in Fig. 6. After that, the material shape regenerator 223 generates a material shape solid model 462 shown in Fig. 36 by performing a subtraction in which the first process turning bar inner surface machining shape solid model 435 is subtracted from the material shape solid model 461 stored in the material shape memory 224 (Step S1504). And then, the material shape regenerator 223 stores the material shape solid model 462 in the material shape memory 224. After that, the material shape regenerator 223 terminates its processing.

Next, processing in the machining cross sectional shape regenerator 225 according to Embodiment 1 will be described by referring to Fig. 37. The processing corresponds to S111 in Fig. 6. By processing similar to that of the machining cross sectional shape generator 214 in S105, the machining cross sectional shape regenerator 225 generates the turning back surface machining cross sectional shape sheet model 471, the second process turning outer surface machining cross sectional shape sheet model 473, and the second process turning inner surface machining cross sectional shape sheet model 475 shown in Fig. 37. Fig. 37 is a diagram showing the turning back surface machining cross sectional shape sheet model 471, the second process turning outer surface machining cross sectional shape sheet model 473, and the second process turning inner surface machining cross sectional shape sheet model 475 generated by the machining cross sectional shape regenerator 225 according to Embodiment 1. Here, the machining cross sectional shape regenerator 225 differs from the machining cross sectional shape generator 214 in using the material shape solid model 462 stored in the material shape memory 224 instead of using the material shape solid model 301 stored in the material shape memory 211.

Furthermore, in the example shown in Fig. 37, the turning front surface machining cross sectional shape sheet model, first process turning outer surface machining cross sectional shape sheet model, and first process turning inner surface machining cross sectional shape sheet model 474 are not generated. This is because the first process turning front surface machining shape solid model 401, the first process turning bar outer surface machining shape solid model 420, and the first process turning bar inner surface machining shape solid model 435 are subtracted from the material shape solid model 301 in a process to generate the material shape solid model 462 in S110 in Fig. 6.

The turning back surface machining cross sectional shape sheet model 471, the second process turning outer surface machining cross sectional shape sheet model 473, and the second process turning inner surface machining cross sectional shape sheet model 475 are stored in the regeneration machining cross sectional shape memory 226.

Next, processing in the machining unit regenerator 227 according to Embodiment 1 will be described. The processing corresponds to S112 in Fig. 6. By processing similar to that of the machining unit generator 216 in S106 in Fig. 6, the machining unit regenerator 227 generates a second process turning back surface machining unit 481, a second process turning bar outer surface machining 483, a second process turning bar inner surface machining unit 485, the first process hole drilling units 486a through 486d, the second process hole drilling units 487e through 487j, and the second process surface machining units 488a through 488h (Step 112). Here, the machining unit regenerator 227 differs from the machining unit generator 216 in using the turning back surface machining cross sectional shape sheet model 471, the second process turning outer surface machining cross sectional shape sheet model 473, and the second process turning inner surface machining cross sectional shape sheet model 475 stored in the regeneration machining cross sectional shape memory 226 instead of using the turning front surface machining cross sectional shape sheet model 340, the turning back surface machining cross sectional shape sheet model 341, the first process turning outer surface machining cross sectional shape sheet model 344, the second process turning outer surface machining cross sectional shape sheet model 345, the first process turning inner surface machining cross sectional shape sheet model 346, and the second process turning inner surface machining cross sectional shape sheet model 347 stored in the machining cross sectional shape memory 215.

The second process turning back surface machining unit 481, the second process turning bar outer surface machining 483, the second process turning bar inner surface machining unit 485, the first process hole drilling units 486a through 486d, the second process hole drilling units 487e through 487j, and the second process surface machining units 488a through 488h are stored in the regeneration machining unit memory 228.

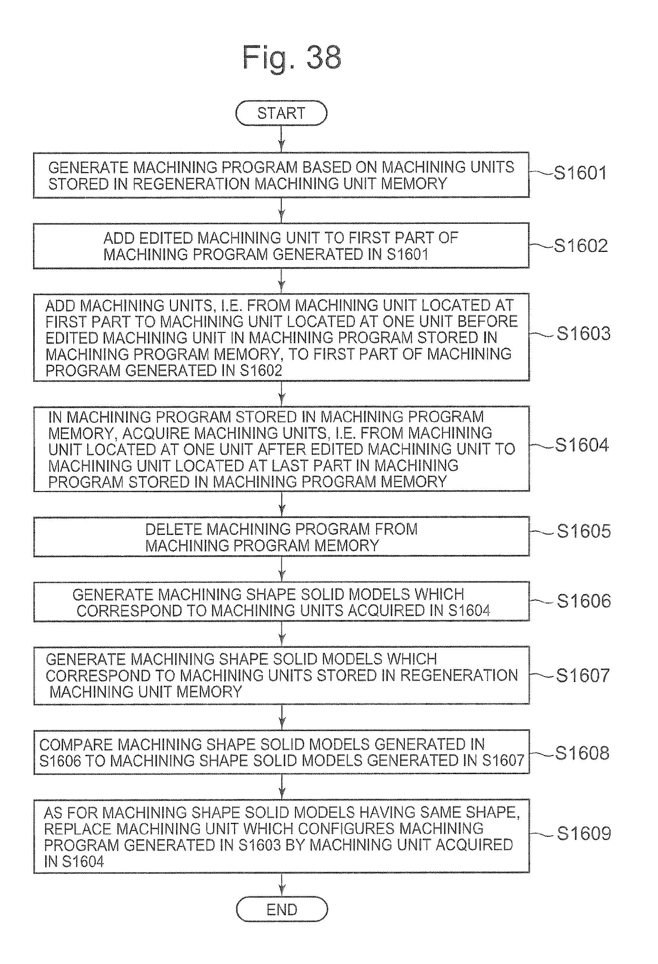

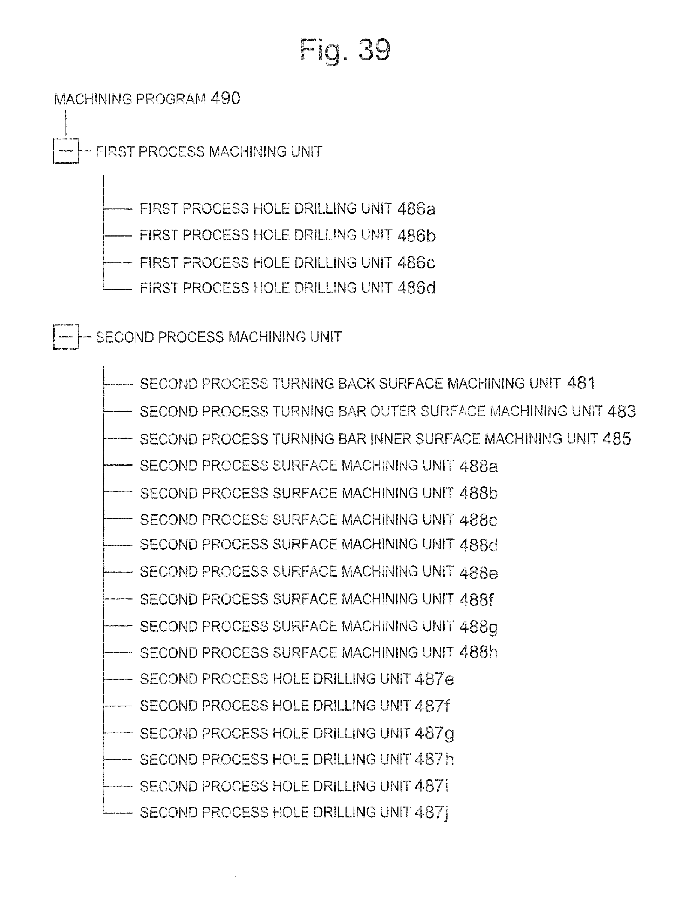

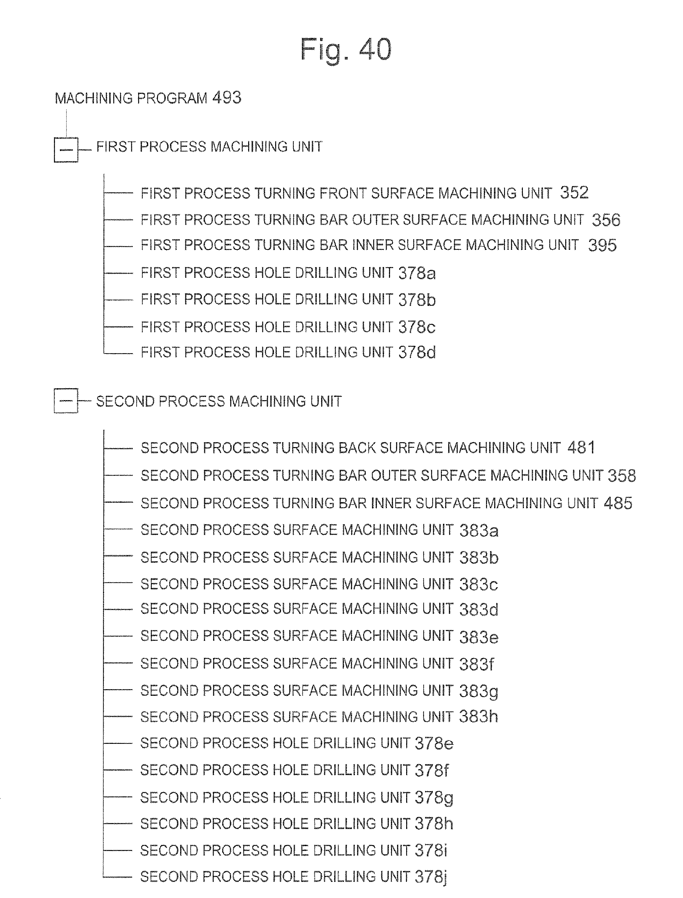

Next, processing in the machining program regenerator 229 according to Embodiment 1 will be described by referring to Figs. 38 through 40. Fig. 38 is a flow chart showing processing of the machining program regenerator 229 according to Embodiment 1, and corresponds to S113 in Fig. 6. Fig. 39 is a machining unit tree diagram showing hierarchically a plurality of machining units, in the order of the machining, which configure a machining program 490 generated by the machining program regenerator 229 according to Embodiment 1. Fig. 40 is a machining unit tree diagram showing hierarchically a plurality of machining units, in the order of the machining, which configure the machining program 493 generated by the machining program regenerator 229 according to Embodiment 1. First, by processing similar to that of the machining program generator 218 in S107 in Fig. 6, the machining program regenerator 229 generates the machining program 490 shown in Fig. 39 based on the second process turning back surface machining unit 481, the second process turning bar outer surface machining 483, the second process turning bar inner surface machining unit 485, the first process hole drilling units 486a through 486d, the second process hole drilling units 487e through 487j, and the second process surface machining units 488a through 488h stored in the regeneration machining unit memory 228 (Step S1601).

Next, the machining program regenerator 229 acquires, from the edited machining unit memory 220, the first process turning bar inner surface machining unit 395 edited in S108 in Fig. 6. After that, the machining program regenerator 229 adds the acquired first process turning bar inner surface machining unit 395 to the first part of the machining program 490 generated in S1601 and generates a machining program 491 (Step S1602).

And then, the machining program regenerator 229 acquires, from the machining shape memory 222, each of the machining units, i.e. from a machining unit located at the first part through a machining unit located at one unit before a machining unit edited in S108 in Fig. 6 in the machining program 390 stored in the machining program memory 230. Next, the machining program regenerator 229 adds the acquired machining units to the first part of the machining program 491 generated in S1602 and generates a machining program 492 (Step S 1603). Concretely, the machining program regenerator 229 adds the first process turning front surface machining unit 352 and the first process turning bar outer surface machining unit 356 to the first part of the machining program 491.

After that, the machining program regenerator 229 acquires, from the machining shape memory 222, each of the machining units, i.e. from a machining unit located at one unit after the machining unit edited in S108 in Fig. 6 through a machining unit located at the last part in the machining program 390 stored in the machining program memory 230 (Step S1604). Concretely, the machining program regenerator 229 acquires each of the machining units, i.e. from the first process hole drilling unit 378a through the second process hole drilling unit 378j.

And then, the machining program regenerator 229 deletes the machining program 390 from the machining program memory 230 (Step S 1605).

Next, by processing similar to that of the machining shape generator 221 in S109 in Fig. 11, the machining program regenerator 229 generates first process hole drilling shape solid models 500a through 500d, a second process turning back surface machining shape solid model 501, a second process turning bar outer surface machining shape solid model 502, a second process turning bar inner surface machining shape solid model 503, second process surface machining shape solid models 504a through 504h, and second process hole drilling shape solid models 505e through 505j (not shown) which correspond to the machining units acquired in S1604 (Step S1606).

After that, by processing similar to that of the machining shape generator 221 in S109 in Fig. 11, the machining program regenerator 229 generates a first process turning front surface machining shape solid model 510, a second process turning back surface machining shape solid model 511, a first process turning bar outer surface machining shape solid model 512, a second process turning bar outer surface machining shape solid model 513, a first process turning bar inner surface machining shape solid model 514, a second process turning bar inner surface machining shape solid model 515, second process surface machining shape solid models 516a through 516h, first process hole drilling shape solid models 517a through 517d, and second process hole drilling shape solid models 518e through 518j (not shown) which correspond to the machining units stored in the regeneration machining unit memory 228 (Step S1607).

And then, the machining program regenerator 229 compares the machining shape solid models generated in S1606 to the machining shape solid models generated in S1607 by a geometrical analysis (Step S1608).

Next, when machining shape solid models having the same shape are found as a result of the comparison in S1608, the machining program regenerator 229 generates the machining program 493 by replacing, for a machining unit which corresponds to the machining shape solid model, the machining unit which configures the machining program 492 generated in S1603 by a machining unit acquired in S1604 (Step S1609). Concretely, the machining program regenerator 229 generates the machining program 493 shown in Fig. 40 by replacing the first process hole drilling units 486a through 486d, the second process turning back surface machining unit 481, the second process surface machining units 488a through 488h, and the second process hole drilling units 487e through 487j by the first process hole drilling units 378a through 378d, the second process turning bar outer surface machining unit 358, the second process surface machining units 383a through 383h, and the second process hole drilling units 378e through 378j, respectively.

The machining program 493 shown in Fig. 40 corresponds to a program in which the first process turning bar inner surface machining unit 360, the second process turning back surface machining unit 354, and the second process turning bar inner surface machining unit 362 in the machining program 360 shown in Fig. 27 are replaced by the first process turning bar inner surface machining unit 395, the second process turning back surface machining unit 481, and the second process turning bar inner surface machining unit 485, respectively.

Furthermore, in S1609, when editing the machining units and generating the machining program 493 multiple times by operating the numerical control programming device 1 multiple times by the operator for example, a newly generated machining program 493 can preferentially retain the already edited machining units.

Next, the machining program regenerator 229 stores the machining program 493 generated in S1609 in the machining program memory 230. After that, the machining program regenerator 229 terminates its processing.

With that, the first process turning bar inner surface machining shape solid model 514, the second process turning back surface machining shape solid model 511, and the second process turning bar inner surface machining shape solid model 515 (not shown) which correspond to the first process turning bar inner surface machining unit 395, the second process turning back surface machining unit 481, and the second process turning bar inner surface machining unit 485 in the machining program 493 do not duplicate with each other.

According to Embodiment 1, when the operator edits the machining units which configure the machining program, a machining program can be again generated automatically so that the uselessly duplicated machining areas do not exist. Therefore, the optimum machining program having fewer useless cutting, shorter machining time, better machining efficiency, and better machining accuracy can be generated.

Note that a machining system to which the numerical control programming device 1 shown in Fig. 1 is applied can be applied to a CAM system.

Also, in S110 in Fig. 6 in Embodiment 1, the first process turning front surface machining shape solid model 401, the first process turning bar outer surface machining shape solid model 420, and the first process turning bar inner surface machining shape solid model 435 are subtracted from the material shape solid model 301. While this brings regeneration of each of the machining units after a machining unit one unit after the edited machining unit in the machining program in S111 and S112 in Fig. 6, it is not limited to this. That is, in S110 in Fig. 6, it is only necessary to subtract, from the material shape solid model 301, at least the first process turning bar inner surface machining shape solid model 435 which corresponds to the edited machining unit in S108 in Fig. 6. In this case, the same effect in Embodiment 1 can be obtained.

In addition, while the product shape solid model 300 and the material shape solid model 301 are expressed in three dimensions in Embodiment 1, they may be expressed in two dimensions.

Furthermore, while the machine tool 6 is equipped with the principal main spindle, auxiliary main spindle, and milling spindle and performs turning and milling in Embodiment 1, it is not limited to this.

Also, while the machining program 390 is generated in S101 through S107 in Fig. 6 in Embodiment 1, it is not limited to this. For example, the machining program 390 used in S108 may be the one stored in advance in the machining program memory 230. In this case, the same effect in Embodiment 1 can be obtained.

In addition, the steps in S101 through S113 in Fig. 6 may be changed as long as they can solve the problems shown in the present invention.

Furthermore, in Embodiment 1, the material shape solid model 301 corresponds to a first material shape model, the product shape solid model 300 corresponds to a product shape model, and the machining program 390 corresponds to a first machining program. The first process turning bar inner surface machining unit 395 corresponds to an edited machining unit, and the machining units which configure the machining program 390, except the first process turning bar inner surface machining unit 395, correspond to first non-edited machining units. The material model 462 corresponds to a second material shape model. The machining units which configure the machining unit 490 correspond to second non-edited machining units.

Also, S108 in Fig. 6 corresponds to a machining unit editing step, S 109 through S112 correspond to second non-edited machining unit generating steps, and S113 corresponds to a second machining program generating step.

**Claims**

1. A numerical control programming method comprising:

   a machining unit editing step for generating an edited machining unit by editing, based on an input, at least one machining unit out of a plurality of machining units which configure a first machining program generated based on a first material shape model and a product shape model;
   a second non-edited machining unit generating step for generating a second non-edited machining unit which corresponds to a machining shape model having no duplication with a machining shape model which corresponds to the edited machining unit based on a first non-edited machining unit which is a machining unit other than the edited machining unit out of the plurality of machining units which configure the first machining program; and
   a second machining program generating step for generating a second machining program including the edited machining unit and the second non-edited machining unit.

2. The numerical control programming method of claim 1 wherein the second non-edited machining unit generating step comprises:

   a second material shape model generating step for generating a second material shape model by subtracting the machining shape model which corresponds to the edited machining unit from the first material shape model;
   a subtracting step for generating a non-edited machining shape model by subtracting the product shape model from the second material shape model; and
   a machining unit generating step for generating the second non-edited machining unit based on the non-edited machining shape model.

3. The numerical control programming method of claim 1 further comprising:

   a comparison step for comparing a machining shape model which corresponds to the first non-edited machining unit to a machining shape model which corresponds to the second non-edited machining unit; and
   a third machining program generating step for generating a third machining program by replacing the second non-edited machining unit which configures the second machining program by the first non-edited machining unit for machining units having the same machining shape model based on a result of the comparison step.

4. The numerical control programming method of claim 1, further comprising a displaying step for displaying, on a display section, a machining shape model which corresponds to the edited machining unit or a machining shape model which corresponds to the second non-edited machining unit.

5. A numerical control programming device comprising:

   an input section;
   a machining unit editor for generating an edited machining unit by editing, based on an input from the input section, at least one machining unit out of a plurality of machining units which configure a first machining program generated based on a first material shape model and a product shape model;
   a second non-edited machining unit generator for generating a second non-edited machining unit which corresponds to a machining shape model having no duplication with a machining shape model which corresponds to the edited machining unit based on a first non-edited machining unit which is a machining unit other than the edited machining unit out of the plurality of machining units which configure the first machining program; and a second machining program generator for generating a second machining program including the edited machining unit and the second non-edited machining unit.

6. The numerical control programming device of claim 5 wherein the second non-edited machining unit generator comprises:

a second material shape model generator for generating a second material shape model by subtracting the machining shape model which corresponds to the edited machining unit from the first material shape model; a subtraction section for generating a non-edited machining shape model by subtracting the product shape model from the second material shape model; and a machining unit generator for generating the second non-edited machining unit based on the non-edited machining shape model.

7. The numerical control programming device of claim 5 further comprising:

a comparison section for comparing a machining shape model which corresponds to the first non-edited machining unit to a machining shape model which corresponds to the second non-edited machining unit; and a third machining program generator for generating a third machining program by replacing the second non-edited machining unit which configures the second machining program by the first non-edited machining unit for machining units having the same machining shape model based on a result of the comparison by the comparison section.

8. The numerical control programming device of claim 5, further comprising a display section for displaying, on the display section, a machining shape model which corresponds to the edited machining unit or a machining shape model which corresponds to the second non-edited machining unit.

9. A numerical control program which makes a computer execute:

a machining unit editing step for generating an edited machining unit by editing, based on an input, at least one machining unit out of a plurality of machining units which configure a first machining program generated based on a first material shape model and a product shape model; a second non-edited machining unit generating step for generating a second non-edited machining unit which corresponds to a machining shape model having no duplication with a machining shape model which corresponds to the edited machining unit based on a first non-edited machining unit which is a machining unit other than the edited machining unit out of the plurality of machining units which configure the first machining program; and a second machining program generating step for generating a second machining program including the edited machining unit and the second non-edited machining unit.

10. The numerical control program of claim 9, wherein the second non-edited machining unit generating step makes a computer execute:

a second material shape model generating step for generating a second material shape model by subtracting the machining shape model which corresponds to the edited machining unit from the first material shape model; a subtracting step for generating a non-edited machining shape model by subtracting the product shape model from the second material shape model; and a machining unit generating step for generating the second non-edited machining unit based on the non-edited machining shape model.

11. The numerical control program of claim 9 further comprising:

a comparison step for comparing a machining shape model which corresponds to the first non-edited machining unit to a machining shape model which corresponds to the second non-edited machining unit; and a third machining program generating step for generating a third machining program by replacing the second non-edited machining unit which configures the second machining program by the first non-edited machining unit for machining units having the same machining shape model based on a result of the comparison step.

12. The numerical control program of claim 9, further comprising a displaying step for displaying, on a display section, a machining shape model which corresponds to the edited machining unit or a machining shape model which corresponds to the second non-edited machining unit.

13. A numerical control apparatus, comprising a memory for storing the numerical control program of any one of claims 9 through 12, which controls an external machine tool by executing the numerical control program.

# Fig. 1

THREE DIMENSIONAL CAD

4

SOLID MODEL

2

NUMERICAL CONTROL
PROGRAMMING DEVICE

3

MACHINING PROGRAM

1

NUMERICAL CONTROL
APPARATUS

5

MACHINE TOOL

6

# Fig. 2

(a) 40

(b) 41

(c) 42a

42b

# Fig. 3

MACHINING DATA — 100

TOOL DATA — 101

SHAPE SEQUENCE DATA — 102

# Fig. 4

| UNo. | UNIT | MODE | ANGLE B | POSITION C | CUTTING STOCK-A | BASE | WALL | FINISHING ALLOWANCE-A | FINISHING ALLOWANCE-R |
|---|---|---|---|---|---|---|---|---|---|
| 1. | END MILL FACE | ZY | 90.0 | 90.000 | 10.000 | 0 | @ | 0.000 | @ |

| SNo. | TOOL | NOMINAL DIAMETER | APPROACH-1 | APPROACH-2 | METHOD AFD | CUTTING-A | CUTTING-R | CIRCUMFERENTIAL SPEED | FEED | M | M |
|---|---|---|---|---|---|---|---|---|---|---|---|
| 1 | END MILL | 10.0A | 0.000 | 0.000 | | 0.000 | 0.000 | 0 | 0.000 | 0 | 0 |

| FIG | FORM | FACE SHIFT R | Z | Y | RADIUS R/$\theta$ | I | J | P | CORNER | ROUGHNESS |
|---|---|---|---|---|---|---|---|---|---|---|
| 1 | LINE | 20.000 | 25.000 | 22.361 | | | | | | |
| 2 | LINE | | -25.000 | 22.361 | | | | | | |
| 3 | LINE | | -25.000 | -22.361 | | | | | | |
| 4 | LINE | | 25.000 | -22.361 | | | | | | |

# Fig. 5

~1

PROCESSOR — 200

201
DISPLAY SECTION

203
DATA INPUT SECTION

205
PRODUCT SHAPE
INPUT SECTION

206
PRODUCT SHAPE
ARRANGING SECTION

208
MATERIAL SHAPE
INPUT SECTION

209
MATERIAL SHAPE
GENERATOR

210
MATERIAL SHAPE
ARRANGING SECTION

212
PROCESS DIVIDING
POSITION SETTING SECTION

214
MACHINING CROSS SECTIONAL
SHAPE GENERATOR

216
MACHINING UNIT GENERATOR

218
MACHINING PROGRAM
GENERATOR

219
MACHINING UNIT EDITOR

221
MACHINING SHAPE
GENERATOR

223
MATERIAL SHAPE
REGENERATOR

225
MACHINING CROSS SECTIONAL
SHAPE REGENERATOR

227
MACHINING UNIT
REGENERATOR

229
MACHINING PROGRAM
REGENERATOR

204
PARAMETER MEMORY

207
PRODUCT SHAPE MEMORY

211
MATERIAL SHAPE MEMORY

213
PROCESS DIVIDING
POSITION MEMORY

215
MACHINING CROSS
SECTIONAL SHAPE MEMORY

217
MACHINING UNIT MEMORY

220
EDITED MACHINING UNIT
MEMORY

222
MACHINING SHAPE MEMORY

224
REGENERATION MATERIAL
SHAPE MEMORY

226
REGENERATION MACHINING
CROSS SECTIONAL SHAPE MEMORY

228
REGENERATION MACHINING
UNIT MEMORY

MACHINING PROGRAM MEMORY ~230

29

# Fig. 6

```
( START )
```

| | |
|---|---|
| INPUT PARAMETERS THROUGH DATA INPUT SECTION | S101 |

| | |
|---|---|
| INPUT PRODUCT SHAPE SOLID MODEL THROUGH PRODUCT SHAPE INPUT SECTION, AND INPUT MATERIAL SHAPE SOLID MODEL THROUGH MATERIAL SHAPE INPUT SECTION | S102 |

| | |
|---|---|
| ARRANGE PRODUCT SHAPE SOLID MODEL ON PROGRAM COORDINATES BY PRODUCT SHAPE ARRANGING SECTION, AND ARRANGE MATERIAL SHAPE SOLID MODEL ON PROGRAM COORDINATES BY MATERIAL SHAPE ARRANGING SECTION | S103 |

| | |
|---|---|
| SET OUTER SURFACE PROCESS DIVIDING POSITION, INNER SURFACE PROCESS DIVIDING POSITION, OUTER SURFACE PROCESS DIVISION OVERLAPPING AMOUNT, AND INNER SURFACE PROCESS DIVISION OVERLAPPING AMOUNT THROUGH PROCESS DIVIDING POSITION SETTING SECTION | S104 |

| | |
|---|---|
| GENERATE CROSS SECTIONAL SHAPE SHEET MODELS BY MACHINING CROSS SECTIONAL SHAPE GENERATOR | S105 |

| | |
|---|---|
| GENERATE MACHINING UNITS BY MACHINING UNIT GENERATOR | S106 |

| | |
|---|---|
| GENERATE MACHINING PROGRAM BY MACHINING PROGRAM GENERATOR | S107 |

| | |
|---|---|
| EDIT MACHINING UNIT BY MACHINING UNIT EDITOR | S108 |

| | |
|---|---|
| GENERATE MACHINING SHAPE SOLID MODELS BY MACHINING SHAPE GENERATOR | S109 |

| | |
|---|---|
| REGENERATE MATERIAL SHAPE SOLID MODEL BY MATERIAL SHAPE GENERATOR | S110 |

| | |
|---|---|
| REGENERATE MACHINING CROSS SECTIONAL SHAPE SHEET MODELS BY MACHINING CROSS SECTIONAL SHAPE REGENERATOR | S111 |

| | |
|---|---|
| REGENERATE SURFACE MACHINING UNITS BY MACHINING UNIT REGENERATOR | S112 |

| | |
|---|---|
| REGENERATE MACHINING PROGRAM BY MACHINING PROGRAM REGENERATOR | S113 |

```
( END )
```

# Fig. 7

Fig. 8

301
300
302
303
X
Z
Y

# Fig. 9

```
START
```

↓

CALCULATE DIMENSIONS OF PRODUCT SHAPE SOLID MODEL IN X AXIS, Y AXIS, AND Z AXIS DIRECTIONS — S201

↓

CALCULATE DIAMETER D OF CYLINDER SHAPE SOLID MODEL — S202

↓

CALCULATE DIMENSION L IN Z AXIS DIRECTION OF CYLINDER SHAPE SOLID MODEL — S203

↓

CALCULATE CYLINDER SHAPE SOLID MODEL HAVING DIAMETER D AND HEIGHT L — S204

↓

ARRANGE CYLINDER SHAPE SOLID MODEL TO INCLUDE PRODUCT SHAPE SOLID MODEL AND SERVE AS MATERIAL SHAPE SOLID MODEL — S205

↓

```
END
```

# Fig. 10

START

CALCULATE DIMENSIONS OF PRODUCT SHAPE SOLID MODEL IN X AXIS, Y AXIS, AND Z AXIS DIRECTIONS — S301

CALCULATE COORDINATE VALUE OF CENTER POSITION OF PRODUCT SHAPE SOLID MODEL — S302

MOVE PRODUCT SHAPE SOLID MODEL SO THAT CENTER POSITION OF PRODUCT SHAPE SOLID MODEL IS POSITIONED ON Z AXIS AND Z COORDINATE VALUE OF END FACE THEREOF BECOMES ZERO — S303

STORE PRODUCT SHAPE SOLID MODEL — S304

END

# Fig.11

# Fig. 12

START

EXTRACT FIRST TURNING SURFACE FROM PRODUCT SHAPE SOLID MODEL —— S401

GENERATE SECOND TURNING SURFACE BY REMOVING HOLE AND MISSING PORTIONS FROM FIRST TURNING SURFACE —— S402

GENERATE TURNING INCLUSION SHAPE SOLID MODEL FROM SECOND TURNING SURFACE —— S403

GENERATE TURNING SHAPE SOLID MODEL BY SUBTRACTING TURNING INCLUSION SHAPE SOLID MODEL FROM MATERIAL SHAPE SOLID MODEL —— S404

GENERATE X-Z PLANE (X IS NO LESS THAN 0, Y IS 0) SHEET MODEL —— S405

GENERATE TURNING CROSS SECTIONAL SHAPE SHEET MODEL BY MULTIPLYING TURNING SHAPE SOLID MODEL BY X-Z PLANE SHEET MODEL —— S406

DIVIDE TURNING CROSS SECTIONAL SHAPE SHEET MODEL INTO TURNING FRONT SURFACE MACHINING CROSS SECTIONAL SHAPE SHEET MODEL, TURNING BACK SURFACE MACHINING CROSS SECTIONAL SHAPE SHEET MODEL, TURNING OUTER SURFACE MACHINING CROSS SECTIONAL SHAPE SHEET MODEL, AND TURNING INNER SURFACE MACHINING CROSS SECTIONAL SHAPE SHEET MODEL —— S407

GENERATE FIRST PROCESS TURNING OUTER SURFACE MACHINING SHAPE SHEET MODEL AND SECOND PROCESS TURNING OUTER SURFACE MACHINING SHAPE SHEET MODEL FROM TURNING OUTER SURFACE MACHINING CROSS SECTIONAL SHAPE SHEET MODEL —— S408

GENERATE FIRST PROCESS TURNING INNER SURFACE MACHINING SHAPE SHEET MODEL AND SECOND PROCESS TURNING INNER SURFACE MACHINING SHAPE SHEET MODEL FROM TURNING INNER SURFACE MACHINING CROSS SECTIONAL SHAPE SHEET MODEL —— S409

GENERATE MACHINING SHAPE SOLID MODEL BY SUBTRACTING PRODUCT SHAPE SOLID MODEL FROM MATERIAL SHAPE SOLID MODEL GENERATE MILLING SHAPE SOLID MODEL BY SUBTRACTING TURNING SHAPE SOLID MODEL FROM MACHINING SHAPE SOLID MODEL —— S410

END

# Fig.13

(a)

320

(b)

321

(c)

322

# Fig.14

(a)

$(X \geqq 0.0 、 Y=0.0)$

331

330

(b)

332

# Fig.15

(a)

(Y=0.0、Z=Z_max)　　　　342　　　　(Y=0.0、Z=Z_min)

341

340

332

343

X

Z

(b)

344

332

X

Z

346

(c)

345

332

X

Z

347

# Fig.16

(a)

350

(b)

351

# Fig. 17

```
                    ( START )
                        │
                        ▼
┌─────────────────────────────────────────────────┐
│ CALCULATE MAXIMUM VALUE AND MINIMUM VALUE OF      │
│ PRODUCT SHAPE SOLID MODEL IN Z AXIS DIRECTION     │──S501
└─────────────────────────────────────────────────┘
                        │
                        ▼
┌─────────────────────────────────────────────────┐
│ DIVIDE TURNING CROSS SECTIONAL SHAPE SHEET MODEL BY│
│ STRAIGHT LINE WHICH PASSES THROUGH MAXIMUM VALUE  │──S502
│ AND MINIMUM VALUE OF PRODUCT SHAPE SOLID MODEL IN │
│ Z AXIS DIRECTION AND IS PARALLEL TO X AXIS        │
└─────────────────────────────────────────────────┘
                        │
                        ▼
┌─────────────────────────────────────────────────┐
│ GENERATE TURNING FRONT SURFACE MACHINING CROSS    │
│ SECTIONAL SHAPE SHEET MODEL, TURNING BACK SURFACE │
│ MACHINING CROSS SECTIONAL SHAPE SHEET MODEL,      │
│ TURNING OUTER SURFACE MACHINING CROSS SECTIONAL   │──S503
│ SHAPE SHEET MODEL, AND TURNING INNER SURFACE      │
│ MACHINING CROSS SECTIONAL SHAPE SHEET MODEL BASED │
│ ON POSITIONS OF FOUR DIVIDED SHEET MODELS         │
└─────────────────────────────────────────────────┘
                        │
                        ▼
                    ( END )
```

# Fig. 18

START

DIVIDE TURNING OUTER SURFACE MACHINING CROSS SECTIONAL SHAPE SHEET MODEL AT OUTER SURFACE PROCESS DIVIDING POSITION — S601

GENERATE FIRST PROCESS TURNING OUTER SURFACE MACHINING CROSS SECTIONAL SHAPE SHEET MODEL AND SECOND PROCESS TURNING OUTER SURFACE MACHINING CROSS SECTIONAL SHAPE SHEET MODEL BASED ON POSITIONS OF TWO DIVIDED SHEET MODELS — S602

EXTEND FIRST PROCESS TURNING OUTER SURFACE MACHINING CROSS SECTIONAL SHAPE SHEET MODEL BY OUTER SURFACE PROCESS DIVISION OVERLAPPING AMOUNT IN Z AXIS DIRECTION — S603

EXTEND SECOND PROCESS TURNING OUTER SURFACE MACHINING CROSS SECTIONAL SHAPE SHEET MODEL BY OUTER SURFACE PROCESS DIVISION OVERLAPPING AMOUNT IN Z AXIS INVERSE DIRECTION — S604

END

EP 2 590 039 A1

# Fig.19

43

# Fig. 20

START

DIVIDE TURNING INNER SURFACE MACHINING CROSS SECTIONAL SHAPE SHEET MODEL AT INNER SURFACE PROCESS DIVIDING POSITION —S701

GENERATE FIRST PROCESS TURNING INNER SURFACE MACHINING CROSS SECTIONAL SHAPE SHEET MODEL AND SECOND PROCESS TURNING INNER SURFACE MACHINING CROSS SECTIONAL SHAPE SHEET MODEL BASED ON POSITIONS OF TWO DIVIDED SHEET MODELS —S702

EXTEND FIRST PROCESS TURNING INNER SURFACE MACHINING CROSS SECTIONAL SHAPE SHEET MODEL BY INNER SURFACE PROCESS DIVISION OVERLAPPING AMOUNT IN Z AXIS DIRECTION —S703

EXTEND SECOND PROCESS TURNING INNER SURFACE MACHINING CROSS SECTIONAL SHAPE SHEET MODEL BY INNER SURFACE PROCESS DIVISION OVERLAPPING AMOUNT IN Z AXIS INVERSE DIRECTION —S704

END

# Fig.21

# Fig. 22

START

GENERATE FIRST PROCESS TURNING BACK SURFACE MACHINING UNIT BASED ON TURNING FRONT SURFACE MACHINING CROSS SECTIONAL SHAPE SHEET MODEL — S801

GENERATE SECOND PROCESS TURNING BACK SURFACE MACHINING UNIT BASED ON TURNING BACK SURFACE MACHINING CROSS SECTIONAL SHAPE SHEET MODEL — S802

GENERATE FIRST PROCESS TURNING BAR OUTER SURFACE MACHINING UNIT BASED ON FIRST PROCESS TURNING OUTER SURFACE MACHINING CROSS SECTIONAL SHAPE SHEET MODEL — S803

GENERATE SECOND PROCESS TURNING BAR OUTER SURFACE MACHINING UNIT BASED ON SECOND PROCESS TURNING OUTER SURFACE MACHINING CROSS SECTIONAL SHAPE SHEET MODEL — S804

GENERATE FIRST PROCESS TURNING BAR INNER SURFACE MACHINING UNIT BASED ON FIRST PROCESS TURNING INNER SURFACE MACHINING CROSS SECTIONAL SHAPE SHEET MODEL — S805

GENERATE SECOND PROCESS TURNING BAR INNER SURFACE MACHINING UNIT BASED ON SECOND PROCESS TURNING INNER SURFACE MACHINING CROSS SECTIONAL SHAPE SHEET MODEL — S806

GENERATE HOLE DRILLING UNIT BASED ON MILLING SHAPE SOLID MODEL — S807

GENERATE SURFACE MACHINING UNIT BASED ON MILLING SHAPE SOLID MODEL — S808

DIVIDE HOLE DRILLING UNIT INTO FIRST PROCESS HOLE DRILLING UNIT AND SECOND PROCESS HOLE DRILLING UNIT DIVIDE SURFACE MACHINING UNIT INTO FIRST PROCESS SURFACE MACHINING UNIT AND SECOND PROCESS SURFACE MACHINING UNIT — S809

END

Fig.23

# Fig.24

(a)

(b)

(c)

(d)

# Fig.25

# Fig. 26

START

ARRANGE FIRST PROCESS TURNING FRONT SURFACE MACHINING UNIT, FIRST PROCESS TURNING BAR OUTER SURFACE MACHINING UNIT, AND FIRST PROCESS TURNING BAR INNER SURFACE MACHINING UNIT IN PREDETERMINED ORDER — S1001

ARRANGE FIRST PROCESS SURFACE MACHINING UNITS IN PREDETERMINED ORDER — S1002

ARRANGE FIRST PROCESS HOLE DRILLING UNITS IN PREDETERMINED ORDER — S1003

ARRANGE SECOND PROCESS TURNING BACK SURFACE MACHINING UNIT, SECOND PROCESS TURNING BAR OUTER SURFACE MACHINING UNIT, AND SECOND PROCESS TURNING BAR INNER SURFACE MACHINING UNIT IN PREDETERMINED ORDER — S1004

ARRANGE SECOND PROCESS SURFACE MACHINING UNITS IN PREDETERMINED ORDER — S1005

ARRANGE SECOND PROCESS HOLE DRILLING UNITS IN PREDETERMINED ORDER — S1006

END

# Fig. 27

MACHINING PROGRAM 493

├─ FIRST PROCESS MACHINING UNIT

    ├── FIRST PROCESS TURNING FRONT SURFACE MACHINING UNIT 352
    ├── FIRST PROCESS TURNING BAR OUTER SURFACE MACHINING UNIT 356
    ├── FIRST PROCESS TURNING BAR INNER SURFACE MACHINING UNIT 360
    ├── FIRST PROCESS HOLE DRILLING UNIT 378a
    ├── FIRST PROCESS HOLE DRILLING UNIT 378b
    ├── FIRST PROCESS HOLE DRILLING UNIT 378c
    └── FIRST PROCESS HOLE DRILLING UNIT 378d

├─ SECOND PROCESS MACHINING UNIT

    ├── SECOND PROCESS TURNING BACK SURFACE MACHINING UNIT 354
    ├── SECOND PROCESS TURNING BAR OUTER SURFACE MACHINING UNIT 358
    ├── SECOND PROCESS TURNING BAR INNER SURFACE MACHINING UNIT 362
    ├── SECOND PROCESS SURFACE MACHINING UNIT 383a
    ├── SECOND PROCESS SURFACE MACHINING UNIT 383b
    ├── SECOND PROCESS SURFACE MACHINING UNIT 383c
    ├── SECOND PROCESS SURFACE MACHINING UNIT 383d
    ├── SECOND PROCESS SURFACE MACHINING UNIT 383e
    ├── SECOND PROCESS SURFACE MACHINING UNIT 383f
    ├── SECOND PROCESS SURFACE MACHINING UNIT 383g
    ├── SECOND PROCESS SURFACE MACHINING UNIT 383h
    ├── SECOND PROCESS HOLE DRILLING UNIT 378e
    ├── SECOND PROCESS HOLE DRILLING UNIT 378f
    ├── SECOND PROCESS HOLE DRILLING UNIT 378g
    ├── SECOND PROCESS HOLE DRILLING UNIT 378h
    ├── SECOND PROCESS HOLE DRILLING UNIT 378i
    └── SECOND PROCESS HOLE DRILLING UNIT 378j

# Fig. 28A

360

EP 2 590 039 A1

| UNo. | UNIT | PORTION TO BE MACHINED | ANGLE B | CUTTING-X | CUTTING-Z | FINISHING ALLOWANCE-X | FINISHING ALLOWANCE-Z | | | | |
|---|---|---|---|---|---|---|---|---|---|---|---|
| 4. | BAR | INNER SURFACE | | 0. | 0. | 0. | 0. | | | | |
| SNo. | TOOL | | NOMINAL SIZE | No.#PATTERN | CUTTING1 | CUTTING2/TIME | CUTTING3 | LEFT UNCUT STOCK-X | LEFT UNCUT STOCK-Z | CIRCUMFERENTIAL SPEED | FEED |
| R1 | TURNING | INNER SURFACE | 16. A | ■ 0 | 4.5 | ◆ | ◆ | ◆ | ◆ | 104 | 0.4 |
| FIG | PTN | FRONT CORNER | START POINT-X | START POINT-Z | END POINT-X | END POINT-Z | BACK CORNER/$ | R/θ | ROUGHNESS | | |
| 1 | TAPER | | 48. | 0. | 46. | 1. | | | | | |
| 2 | LINE | | ◆ | ◆ | 46. | 75. | | ◆ | | | |
| 3 | LINE | | ◆ | ◆ | 0. | 75. | | ◆ | ■ | | |

# Fig. 28B

395

| UNo. | UNIT | PORTION TO BE MACHINED | ANGLE B | CUTTING-X | CUTTING-Z | FINISHING ALLOWANCE-X | FINISHING ALLOWANCE-Z | | | | |
|---|---|---|---|---|---|---|---|---|---|---|---|
| 4. | BAR | INNER SURFACE | | 0. | 0. | 0. | 0. | | | | |
| SNo. | TOOL | | NOMINAL SIZE | No.#PATTERN | CUTTING1 | CUTTING2/TIME | CUTTING3 | LEFT UNCUT STOCK-X | LEFT UNCUT STOCK-Z | CIRCUMFERENTIAL SPEED | FEED |
| R1 | TURNING | INNER SURFACE | 16. A | ■ 0 | 4.5 | ◆ | ◆ | ◆ | ◆ | 104 | 0.4 |
| FIG | PTN | FRONT CORNER | START POINT-X | START POINT-Z | END POINT-X | END POINT-Z | BACK CORNER/$ | R/θ | ROUGHNESS | | |
| 1 | TAPER | | 48. | 0. | 46. | 1. | | | | | |
| 2 | LINE | | ◆ | ◆ | 46. | 125. | | ◆ | | | |
| 3 | LINE | | ◆ | ◆ | 0. | 125. | | ◆ | ■ | | |

EP 2 590 039 A1

## Fig. 29

```
              ( START )
                  │
                  ▼
┌─────────────────────────────────────────────────────┐
│ GENERATE RECTANGULAR SHEET MODEL BASED ON FIRST       │
│ PROCESS TURNING FRONT SURFACE MACHINING UNIT AND      │──S1101
│ SECOND PROCESS TURNING BACK SURFACE MACHINING UNIT    │
└─────────────────────────────────────────────────────┘
                  │
                  ▼
┌─────────────────────────────────────────────────────┐
│ GENERATE FIRST PROCESS TURNING FRONT SURFACE          │
│ MACHINING SHAPE SOLID MODEL AND SECOND PROCESS        │──S1102
│ TURNING BACK SURFACE MACHINING SHAPE SOLID MODEL      │
│ BASED ON GENERATED RECTANGULAR SHEET MODEL            │
└─────────────────────────────────────────────────────┘
                  │
                  ▼
┌─────────────────────────────────────────────────────┐
│ GENERATE FIRST PROCESS TURNING BAR OUTER SURFACE      │
│ MACHINING SHEET MODEL, SECOND PROCESS TURNING BAR     │
│ OUTER SURFACE MACHINING SHEET MODEL, FIRST PROCESS    │
│ TURNING BAR INNER SURFACE MACHINING SHEET MODEL,      │
│ AND SECOND PROCESS TURNING BAR INNER SURFACE          │
│ MACHINING SHEET MODEL BASED ON FIRST PROCESS TURNING  │──S1103
│ BAR OUTER SURFACE MACHINING UNIT,                     │
│ SECOND PROCESS TURNING BAR OUTER SURFACE MACHINING    │
│ UNIT, FIRST PROCESS TURNING BAR INNER SURFACE         │
│ MACHINING UNIT,                                       │
│ AND SECOND PROCESS TURNING BAR INNER SURFACE          │
│ MACHINING UNIT                                        │
└─────────────────────────────────────────────────────┘
                  │
                  ▼
┌─────────────────────────────────────────────────────┐
│ GENERATE FIRST PROCESS TURNING BAR OUTER SURFACE      │
│ MACHINING SHAPE SOLID MODEL, SECOND PROCESS TURNING   │
│ BAR OUTER SURFACE MACHINING SHAPE SOLID MODEL, FIRST  │
│ PROCESS TURNING BAR INNER SURFACE MACHINING SHAPE     │
│ SOLID MODEL, AND SECOND PROCESS TURNING BAR INNER     │
│ SURFACE MACHINING SHAPE SOLID MODEL BASED ON          │──S1104
│ GENERATED FIRST PROCESS TURNING BAR OUTER SURFACE     │
│ MACHINING SHEET MODEL, SECOND PROCESS TURNING BAR     │
│ OUTER SURFACE MACHINING SHEET MODEL, FIRST PROCESS    │
│ TURNING BAR INNER SURFACE MACHINING SHEET MODEL, AND  │
│ SECOND PROCESS TURNING BAR INNER SURFACE MACHINING    │
│ SHEET MODEL                                           │
└─────────────────────────────────────────────────────┘
                  │
                  ▼
┌─────────────────────────────────────────────────────┐
│ GENERATE FIRST PROCESS SURFACE MACHINING SHEET MODEL  │
│ AND SECOND PROCESS SURFACE MACHINING SHEET MODEL      │──S1105
│ BASED ON FIRST PROCESS SURFACE MACHINING UNIT AND     │
│ SECOND PROCESS SURFACE MACHINING UNIT                 │
└─────────────────────────────────────────────────────┘
                  │
                  ▼
┌─────────────────────────────────────────────────────┐
│ GENERATE FIRST PROCESS SURFACE MACHINING SHEET MODEL  │
│ AND SECOND PROCESS SURFACE MACHINING SHEET MODEL      │──S1106
│ BASED ON GENERATED FIRST PROCESS SURFACE MACHINING    │
│ SHEET MODEL AND SECOND PROCESS SURFACE MACHINING      │
│ SHEET MODEL                                           │
└─────────────────────────────────────────────────────┘
                  │
                  ▼
┌─────────────────────────────────────────────────────┐
│ GENERATE CYLINDER SHAPE SOLID MODEL BASED ON FIRST    │
│ PROCESS HOLE DRILLING UNIT AND SECOND PROCESS HOLE    │──S1107
│ DRILLING UNIT                                         │
└─────────────────────────────────────────────────────┘
                  │
                  ▼
┌─────────────────────────────────────────────────────┐
│ GENERATE CONICAL SHAPE SOLID MODEL BASED ON FIRST     │
│ PROCESS HOLE DRILLING UNIT AND SECOND PROCESS HOLE    │──S1108
│ DRILLING UNIT                                         │
└─────────────────────────────────────────────────────┘
                  │
                  ▼
┌─────────────────────────────────────────────────────┐
│ GENERATE FIRST PROCESS HOLE DRILLING SHAPE SOLID      │
│ MODEL AND FIRST PROCESS HOLE DRILLING SHAPE SOLID     │──S1109
│ MODEL BASED ON GENERATED CYLINDER SHAPE SOLID MODEL   │
│ AND CONICAL SHAPE SOLID MODEL                         │
└─────────────────────────────────────────────────────┘
                  │
                  ▼
              (  END  )
```

# Fig.30

(a)

350

400

X

Z

351

(b)

400

401

X

Z    Y

# Fig.31

(a)

(b)

# Fig.32

(a)

(Z=125 0)    (Z=75 0)

434    346b    433    346c

432    431    359

430

(b)

433    435

X    Z    Y

# Fig.33

(a)

450g

X    Z    Y

(b)

380    450g

381

451g

X    Z    Y

Fig.34

# Fig. 35

```
                    ( START )
                        |
                        v
+-------------------------------------------------+
| GENERATE MATERIAL SHAPE SOLID MODEL BY SUBTRACTING, |
| FROM MATERIAL SHAPE SOLID MODEL STORED IN MATERIAL  |
| SHAPE MEMORY, EACH OF MACHINING SHAPE SOLID MODELS  |
| CORRESPONDING TO EACH OF MACHINING UNITS, I.E. FROM |~S1501
| MACHINING UNIT LOCATED AT FIRST PART TO MACHINING UNIT|
| LOCATED AT ONE UNIT BEFORE EDITED MACHINING UNIT IN |
| MACHINING PROGRAM                                   |
+-------------------------------------------------+
                        |
                        v
+-------------------------------------------------+
| EXTRACT SOLID MODELS WHICH CONTACT OR INTERSECT WITH|
| OUTER SURFACE PROCESS DIVIDING POSITION OR INNER    |
| SURFACE PROCESS DIVIDING POSITION FROM MACHINING    |
| SHAPE SOLID MODELS CORRESPONDING TO EACH OF         |~S1502
| MACHINING UNITS, I.E. FROM MACHINING UNIT LOCATED AT|
| ONE UNIT AFTER EDITED MACHINING UNIT TO MACHINING UNIT|
| LOCATED AT LAST PART IN MACHINING PROGRAM           |
+-------------------------------------------------+
                        |
                        v
+-------------------------------------------------+
| ADD EXTRACTED MACHINING SHAPE SOLID MODELS TO       |~S1503
| MATERIAL SHAPE SOLID MODEL GENERATED IN S1501       |
+-------------------------------------------------+
                        |
                        v
+-------------------------------------------------+
| SUBTRACT MACHINING SHAPE SOLID MODEL WHICH          |
| CORRESPONDS TO EDITED MACHINING UNIT FROM MATERIAL  |~S1504
| SHAPE SOLID MODEL GENERATED IN S1503                |
+-------------------------------------------------+
                        |
                        v
                    ( END )
```

# Fig.36

# Fig.37

# Fig. 38

START

GENERATE MACHINING PROGRAM BASED ON MACHINING UNITS STORED IN REGENERATION MACHINING UNIT MEMORY ⎯ S1601

ADD EDITED MACHINING UNIT TO FIRST PART OF MACHINING PROGRAM GENERATED IN S1601 ⎯ S1602

ADD MACHINING UNITS, I.E. FROM MACHINING UNIT LOCATED AT FIRST PART TO MACHINING UNIT LOCATED AT ONE UNIT BEFORE EDITED MACHINING UNIT IN MACHINING PROGRAM STORED IN MACHINING PROGRAM MEMORY, TO FIRST PART OF MACHINING PROGRAM GENERATED IN S1602 ⎯ S1603

IN MACHINING PROGRAM STORED IN MACHINING PROGRAM MEMORY, ACQUIRE MACHINING UNITS, I.E. FROM MACHINING UNIT LOCATED AT ONE UNIT AFTER EDITED MACHINING UNIT TO MACHINING UNIT LOCATED AT LAST PART IN MACHINING PROGRAM STORED IN MACHINING PROGRAM MEMORY ⎯ S1604

DELETE MACHINING PROGRAM FROM MACHINING PROGRAM MEMORY ⎯ S1605

GENERATE MACHINING SHAPE SOLID MODELS WHICH CORRESPOND TO MACHINING UNITS ACQUIRED IN S1604 ⎯ S1606

GENERATE MACHINING SHAPE SOLID MODELS WHICH CORRESPOND TO MACHINING UNITS STORED IN REGENERATION MACHINING UNIT MEMORY ⎯ S1607

COMPARE MACHINING SHAPE SOLID MODELS GENERATED IN S1606 TO MACHINING SHAPE SOLID MODELS GENERATED IN S1607 ⎯ S1608

AS FOR MACHINING SHAPE SOLID MODELS HAVING SAME SHAPE, REPLACE MACHINING UNIT WHICH CONFIGURES MACHINING PROGRAM GENERATED IN S1603 BY MACHINING UNIT ACQUIRED IN S1604 ⎯ S1609

END

# Fig. 39

MACHINING PROGRAM 490

── FIRST PROCESS MACHINING UNIT

── FIRST PROCESS HOLE DRILLING UNIT 486a
── FIRST PROCESS HOLE DRILLING UNIT 486b
── FIRST PROCESS HOLE DRILLING UNIT 486c
── FIRST PROCESS HOLE DRILLING UNIT 486d

── SECOND PROCESS MACHINING UNIT

── SECOND PROCESS TURNING BACK SURFACE MACHINING UNIT 481
── SECOND PROCESS TURNING BAR OUTER SURFACE MACHINING UNIT 483
── SECOND PROCESS TURNING BAR INNER SURFACE MACHINING UNIT 485
── SECOND PROCESS SURFACE MACHINING UNIT 488a
── SECOND PROCESS SURFACE MACHINING UNIT 488b
── SECOND PROCESS SURFACE MACHINING UNIT 488c
── SECOND PROCESS SURFACE MACHINING UNIT 488d
── SECOND PROCESS SURFACE MACHINING UNIT 488e
── SECOND PROCESS SURFACE MACHINING UNIT 488f
── SECOND PROCESS SURFACE MACHINING UNIT 488g
── SECOND PROCESS SURFACE MACHINING UNIT 488h
── SECOND PROCESS HOLE DRILLING UNIT 487e
── SECOND PROCESS HOLE DRILLING UNIT 487f
── SECOND PROCESS HOLE DRILLING UNIT 487g
── SECOND PROCESS HOLE DRILLING UNIT 487h
── SECOND PROCESS HOLE DRILLING UNIT 487i
── SECOND PROCESS HOLE DRILLING UNIT 487j

# Fig. 40

MACHINING PROGRAM 493

─ FIRST PROCESS MACHINING UNIT

 ── FIRST PROCESS TURNING FRONT SURFACE MACHINING UNIT 352
 ── FIRST PROCESS TURNING BAR OUTER SURFACE MACHINING UNIT 356
 ── FIRST PROCESS TURNING BAR INNER SURFACE MACHINING UNIT 395
 ── FIRST PROCESS HOLE DRILLING UNIT 378a
 ── FIRST PROCESS HOLE DRILLING UNIT 378b
 ── FIRST PROCESS HOLE DRILLING UNIT 378c
 ── FIRST PROCESS HOLE DRILLING UNIT 378d

─ SECOND PROCESS MACHINING UNIT

 ── SECOND PROCESS TURNING BACK SURFACE MACHINING UNIT 481
 ── SECOND PROCESS TURNING BAR OUTER SURFACE MACHINING UNIT 358
 ── SECOND PROCESS TURNING BAR INNER SURFACE MACHINING UNIT 485
 ── SECOND PROCESS SURFACE MACHINING UNIT 383a
 ── SECOND PROCESS SURFACE MACHINING UNIT 383b
 ── SECOND PROCESS SURFACE MACHINING UNIT 383c
 ── SECOND PROCESS SURFACE MACHINING UNIT 383d
 ── SECOND PROCESS SURFACE MACHINING UNIT 383e
 ── SECOND PROCESS SURFACE MACHINING UNIT 383f
 ── SECOND PROCESS SURFACE MACHINING UNIT 383g
 ── SECOND PROCESS SURFACE MACHINING UNIT 383h
 ── SECOND PROCESS HOLE DRILLING UNIT 378e
 ── SECOND PROCESS HOLE DRILLING UNIT 378f
 ── SECOND PROCESS HOLE DRILLING UNIT 378g
 ── SECOND PROCESS HOLE DRILLING UNIT 378h
 ── SECOND PROCESS HOLE DRILLING UNIT 378i
 ── SECOND PROCESS HOLE DRILLING UNIT 378j

| **INTERNATIONAL SEARCH REPORT** | International application No. |
|---|---|
| | PCT/JP2010/004355 |

| A. CLASSIFICATION OF SUBJECT MATTER |
|---|
| *G05B19/4093*(2006.01)i, *G05B19/4097*(2006.01)i |
| According to International Patent Classification (IPC) or to both national classification and IPC |

| B. FIELDS SEARCHED |
|---|
| Minimum documentation searched (classification system followed by classification symbols) |
| G05B19/18-19/416 |
| Documentation searched other than minimum documentation to the extent that such documents are included in the fields searched |
| Jitsuyo Shinan Koho 1922-1996 Jitsuyo Shinan Toroku Koho 1996-2010<br>Kokai Jitsuyo Shinan Koho 1971-2010 Toroku Jitsuyo Shinan Koho 1994-2010 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| A | JP 2007-172058 A (Murata Machinery Ltd.),<br>05 July 2007 (05.07.2007),<br>entire text; all drawings<br>(Family: none) | 1-13 |
| A | WO 2005/002792 A1 (Mitsubishi Electric Corp.),<br>13 January 2005 (13.01.2005),<br>entire text; all drawings<br>& US 2007/0185607 A1 & EP 1642675 A1<br>& WO 2005/002792 A1 & DE 602004026057 D<br>& CN 1816419 A & TW 251135 B<br>& KR 10-2005-0102122 A & RU 2006103238 A | 1-13 |
| A | JP 7-191722 A (Nissan Motor Co., Ltd.),<br>28 July 1995 (28.07.1995),<br>entire text; all drawings<br>(Family: none) | 1-13 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 July, 2010 (28.07.10) | 10 August, 2010 (10.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

<table>
<tr><td colspan="2" align="center"><b>INTERNATIONAL SEARCH REPORT</b></td><td>International application No.<br><br>PCT/JP2010/004355</td></tr>
</table>

| C (Continuation). | DOCUMENTS CONSIDERED TO BE RELEVANT | |
|---|---|---|
| Category* | Citation of document, with indication, where appropriate, of the relevant passages | Relevant to claim No. |
| A | JP 2005-18457 A  (Toyota Motor Corp.),<br>20 January 2005 (20.01.2005),<br>entire text; all drawings<br>(Family: none) | 1-13 |
| A | JP 7-175507 A  (IBM Japan, Ltd.),<br>14 July 1995 (14.07.1995),<br>entire text; all drawings<br>& US 5561601 A | 1-13 |

Form PCT/ISA/210 (continuation of second sheet) (July 2009)

**EP 2 590 039 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008009806 A
- JP 2002268718 A